# EUROPEAN PATENT SPECIFICATION

(11) **EP 4 348 036 B1**
(45) Date of publication and mention of the grant of the patent: **22.04.2026**
(21) Application number: 22732614.7
(22) Date of filing: 01.06.2022
(51) Int. Cl.: F03B 13/18

(54) **COMBINED WAVE ENERGY CONVERTER AND GRID STORAGE**
KOMBINIERTER WELLENENERGIEWANDLER UND NETZSPEICHERUNG
CONVERTISSEUR D'ÉNERGIE HOULOMOTRICE ET STOCKAGE DE RÉSEAU COMBINÉS

(30) Priority: 04.06.2021 GB 202108002
(43) Date of publication of application: 10.04.2024
(73) Proprietor: Twefda Limited, Aberdeen Aberdeenshire AB25 3RX (GB)
(72) Inventor: DOMINGUEZ MARTIN, Francisco Javier, Aberdeen, Aberdeenshire AB16 5YA (GB)
(74) Representative: Agulló Pastor, Javier
(86) International application number: PCT/GB2022/051391
(87) International publication number: WO 2022/254208

(56) References cited:
- EP-A2- 2 708 730
- KR-A- 20100 004 609
- US-A- 4 203 294
- US-A- 4 627 240
- US-B2- 7 059 123

## Description

### TECHNICAL FIELD OF THE INVENTION

This invention belongs to the technical field of renewable energy producing apparatuses, systems and facilities. In particular, it refers to facilities or apparatus for harnessing energy from the ocean waves motion. More particularly, some of the apparatus and/or facilities of the invention for harvesting energy from waves are of the type known as point absorbers, which is a type of Wave Energy Converter. In addition, in some embodiments, the apparatuses may also have the capability of storing energy in the form of potential energy.

### BACKGROUND TO THE INVENTION

It is generally recognised that climate change is mainly due to the result of human activities, conspicuously among them is the fossil-fuel derived energy generation and transportation, which produce colossal amounts of greenhouse gases, such as CO₂.

In order to minimise the effects of climate change in the long term, there is an on-going global effort to switch to a more sustainable energy mix in which renewable energy production has increased share in the overall global energy production.

However, the main sources of renewable energy (solar, wind, tidal, waves) are intermittent, which means that there are periods of intense energy availability interspersed with periods of negligible energy availability.

This disadvantage causes that the electric grid is periodically overloaded, such that it is mandatory to temporarily cease renewable energy production from some facilities or apparatus, at a cost for energy consumers, when there is a great amount of energy available, in order to maintain an adequate level of energy in the electrical grid. This contrasts with other periods of time when there is not enough renewable energy available to supply the actual consumption and it is necessary to make use of fossil fuel derived energy.

In other words, renewable energy availability is not always balanced or in phase with the actual energy demand variability.

On another hand, it is currently estimated that seas and oceans can provide tremendous amounts of renewable energy. Marine renewable energy takes the form of kinetic energy (winds and currents), potential energy (tidal amplitude), mechanical energy (waves), thermal potential (vertical temperature gradients) or even osmotic pressure (horizontal gradients of salinity).

In countries and territories with extensive maritime areas, such as Scotland, it is recognised that renewable marine energy can play an important role in a low-carbon electricity production in a sustainable energy mix. US 4 203 294 A discloses a wave energy conversion system mechanically attached to the bottom of the sea.

### SUMMARY OF THE INVENTION

According to a first aspect of the present invention there is provided a wave energy production apparatus for producing energy from the heave motion of the surface of a body of water as claimed in claim 1. The apparatus comprises:
- one or more compression module which comprise a piston and a cylinder assembly
- a reciprocating assembly positioned around the compression module, which is operatively connected to cylinder, such that, in Generation Mode, reciprocates together with the cylinder relative to the piston of the compression module due to the movement caused by the heave and sinking movement of the surface of the body of water, wherein said reciprocating assembly comprises at least one first weight changing mechanism comprising one or more dynamic compensation tank(s), which has at least one aperture with a closure configured to open and establish fluid communication between the dynamic compensation tank and the body of water in order to allow water to at least partially flood the dynamic compensation tank(s) when the water surface rises or heaves and the reciprocating assembly moves upward relative to the piston(s) and to close fluid communication between the dynamic compensation tank(s) and the body of water and retain water inside the dynamic compensation tank(s) when the water surface sinks and the reciprocating assembly moves downwards relative to the piston(s), wherein the cylinder(s) of the compression module(s) are configured to contain a fluid that is energised by the reciprocating movement of the cylinder(s), in Generation Mode, and said energised fluid is used to produce a fluid pressure that is eventually converted in electric energy.

Using a conceptual analogy, in an internal combustion engine, the pistons reciprocate within the cylinders, whereas in this apparatus, the cylinders reciprocate together with a buoyant body called reciprocating assembly, thanks to the action of the ocean, whilst the piston(s) remain fixed to the seabed thanks to a connecting board that acts as an interface.

This apparatus may produce a larger amount of energy from the waves in a body of water compared to other point energy absorbers, because the downward movement of the reciprocating assembly benefits from the surplus potential energy of the water retained in the dynamic compensation tank(s), whereas in the upward movement of the reciprocating assembly, the water in the dynamic compensation tank does not lose its energy because the dynamic compensation tank is in fluid communication with the body of water. Therefore, the energy contained in the water within the Dynamic Compensation Tank is not used to push the Reciprocating Assembly upwards.

The one or more compression modules are supported on a base, henceforth also called a connecting board, by means of one or more piston rods.

Preferably the connecting board is reversibly attachable to an underwater structure fixedly connected to the bottom of the body of water or seabed.

Preferably the apparatus may incorporate a watering system to allow flooding/drying the ballast tank(s).

Preferably, the reciprocating assembly comprises one or more static compensation tank.

This embodiment allows the apparatus to also perform the function of storing energy, because the reciprocating assembly can be jacked up by applying fluid pressure to the cylinders, in a chamber above the piston, and the dynamic and static compensation tank may be simultaneously or subsequently completely or partially filled with water with the watering system mentioned above. All this potential energy, (that of the water and assembly pushed several meters high) can be stored indefinitely and be released when it is more convenient in a continuously fluctuating energy price market.

Therefore, the static compensation tank may be completely or partially filled with water in energy storage operational mode.

The dual function of the apparatus is a very important advantage over other wave energy producing apparatuses, in the sense that, by operating a plurality of apparatuses, all, some or none can be in an energy generation mode whereas all, some or none can also be simultaneously in different operating modes. This flexibility allows an energy operator to have a combination of apparatuses in energy generation, energy storage and/or locked mode at any given time, conveniently adapted to the weather and energy market conditions. In this scenario, when the weather is such that a surplus energy is created, some apparatuses might be producing energy and releasing it to the grid, but some might be absorbing it in order to store it and release it at a later moment in time when there is no longer wave energy surplus, thus achieving a premium price for that energy which was previously absorbed in a period of surplus energy production.

By being removably attachable to an underwater structure fixedly connected to the bottom of the body of water, for example, the seabed, it is possible to decouple the apparatus from the underwater structure, at least temporarily, and take the apparatus to another location for repair, for shelter in periods of potentially damaging weather, or to another area where the waves are more suitable.

In the apparatus deployment stage, the connecting board comprises auxiliary elements such as automated thrusters, retractable orientation pins (to undertake horizontal alignment) and position and orientation sensing devices, all of which may be removed from the connecting board once the apparatus has been successfully coupled to an underwater structure.

The compression module may be divided by the piston in an upper chamber and a lower chamber. In the generation functional mode, due to the reciprocating movement of the reciprocating assembly and cylinder caused by the waves, the fluid pressure and volume in the upper chamber are continuously oscillating between a maximum and a minimum value, and vice versa, in the lower chamber, respectively, in each compression module. This causes an oscillating fluid pressure differential between the upper and lower chamber.

Preferably, the one or more compression module are connected to a first fluid circuit configured to transform the oscillating fluid pressure differential between the upper and the lower chamber of the compression module into a pressure differential that is delivered to permanent high- and a low-pressure points of a second fluid circuit.

The first fluid circuit may comprise a regulation valve before the fluid abandons the first fluid circuit, that may be used to synchronise (phase in) the motion of the waves in the ocean with the reciprocating motion of the reciprocating assembly so that crests and troughs are vertically aligned.

Preferably, the permanent high- and low-pressure points are fluidly connected by the second fluid circuit so as to drive one or more turbines configured to transform the pressure differential into electric energy.

Preferably, the permanent high- and low-pressure points are fluidly connected to one or more buffer tank(s) for accommodating variations in fluid quantity and/or pressure within the second fluid circuit.

Preferably, the apparatus comprises a plurality of compression modules. When there is a plurality of compression modules, they can be dynamically interconnected in many ways to optimise fluid flow and pressure in order to reduce the piping system weight.

When the apparatus comprises a plurality of compression modules, the apparatus may comprise several manifolds with automated valves (on/off and three-way) to allow flexible fluid interconnections among the compression modules' upper and lower chambers, respectively, and between these and the first fluid circuit such that the pressures and fluid flows in the first circuit are optimised.

For example, when the compression modules are producing a larger fluid flow at lower pressure, (when the reciprocating assembly is at an intermediate position) all the compression modules are connected in series to the first fluid circuit, such that the resulting pressure in it is the addition of the pressure in each of the compression modules and the flow is the same in all compression modules and when the compression modules are producing a smaller fluid flow at higher pressure (when the reciprocating assembly is at its highest or lowest position) all the compression modules are connected in parallel to the first fluid circuit, such that the pressure in it is the same as in all the compression modules and the flow in the first fluid circuit is the addition of all the flows produced by each compression module.

This configuration may be beneficial because it optimises the pressure and fluid flows in the first circuit and offsets the large fluid volumes produced by each of the compression modules with a lower volume and more pressurised flow and the small volume with high pressure at the end of a stroke with a fluid flow with more volume and less pressure in the piping system. Therefore, the fluid flows and pressures in the first circuit are more uniform and do not vary between extremely low and large pressures and volumes, so that the pipe diameters and pipe wall thicknesses do not need to be extremely large and therefore the cost and the weight of the piping system may be reduced and it is safer, by using lower overall pressures and flows, to avoid turbulent flows that can cause vibrations and/or extreme pressures that require oversizing the thickness of the pipes.

Additionally, the several manifolds with automated on/off and three-way valves are also configured such that, when there are two or more compression modules, these may be also connected in compression module groups combined in series and/or in parallel or a combination of both to optimise the pressure and flow in the first circuit also at intermediate locations of the reciprocating assembly between the intermediate and an extreme (low or high) position.

The reciprocating assembly may comprise a second weight changing mechanism (see page 2, first paragraph of "Summary of invention") comprising one or more second ballast tank(s), henceforth also called static compensation tank(s). This static compensation tank(s), mainly used for energy storage purposes, may also be filled with more or less ballast weight, typically water, in generation mode, in order to adjust the buoyancy of the reciprocating assembly in any given situation according to any properties of the current waves, such as wavelength, height and/or frequency, for example, in order to increase the performance.

To be used in energy storage mode or, for example, to move the reciprocating assembly to a safe height in case of storms, the compression modules need to extend a considerable length above the water surface, for example, at least 10 meters. This may imply to have a very large amount of fluid within the cylinders. When the apparatus is in generation mode, this may prohibitively increase the weight of the apparatus.

In order to reduce the weight of the apparatus in generation mode, the lower chamber of the compression modules may comprise one partition, comprising a fake piston, to divide the lower chamber in an upper subsection filled with fluid and a lower subsection which can be filled with pressurised gas. These two sections are separated by a vertically movable fake piston that might be lockable with the expansion of a diaphragm. This feature is also considered a weight changing mechanism and it is also known as a specific weight adapter.

In order to fill the lower chamber lower subsection with pressurised gas, a gas supply is necessary, typically nitrogen. This supply is done underwater. For this reason, the lower chambers comprise a gas supply valve covered with a cap defining a fluid inlet and a fluid outlet in order to flush the water in the space beneath the cap and above the valves with dry gas. These are known as dry submerged caps.

The valves managing the flow of gas to the media shutter mechanism may be isolated by caps from the seawater in order to preserve them and maximise their service life. If a maintenance operation is required in these valves, the cap may be open, the maintenance routine takes place and the whole mechanism will be covered again with the caps. Once covered with the caps, the space beneath the caps is flushed with nitrogen supplied by an umbilical to remove all seawater under the cap and leave the space between the cap and the valves completely dry and seawater-free.

Preferably the piston rods are hollow, and their interior is accessible to operators for inspection and repair until their base.

Preferably, the piston rods comprise inspection windows to oversee the interior of the cylinders.

Preferably, one or more of the piston rods comprise at their base a diver hatch connected to a dry floodable dock, such that divers can descend through the piston rods and perform inspection or repair operations on the base.

Optionally, the first fluid circuit may be located on the reciprocating assembly. Preferably, the first fluid circuit is located on the connecting board, to reduce the weight of the reciprocating assembly.

Optionally, the second fluid circuit may be located at the connecting board. Preferably, the second fluid circuit is located on an altogether separate location, henceforth named renewable energy hub, to reduce the weight of the apparatus.

Therefore, it is envisaged that the second fluid circuit (with its turbine(s) and buffer tank(s)) may be located elsewhere, in a renewable energy hub, and shared among one or more wave energy production apparatuses according to the invention. In this manner, we would have a wave energy production facility or association, rather than a single wave energy production apparatus, with the corresponding capital savings in common infrastructure. This renewable energy hub welcomes contributions of other fluid driven apparatuses offshore, and may act as an integrator of offshore apparatuses or facilities, such as wind farms.

Optionally the wave energy production apparatus may be configured to delay the downward motion of the reciprocating assembly with respect of the sinking movement of the surface of the body of water.

This feature causes that the downward movement of the reciprocating assembly is not, or at least, is less affected by its buoyancy within the body of water and therefore, the downward movement takes place faster than if it was not delayed, therefore allowing to retrieve more power from the system into electric power (and allow to match the phasing of the reciprocation motion of the WEC (Wave Energy Converter) making the trough of this, coincide with the trough of the wave - the performance of the power harvesting utterly depends on the relative frequency of the interaction WEC (Wave Energy Converter) Wave).

According to a **second aspect** there is provided an energy production facility or association comprising one or more wave energy production apparatus according to the first aspect of the invention and at least one renewable energy hub in which the second fluid circuit, turbine(s) and buffer tank(s) are located, among other equipment.

According to a **third aspect** there is provided a renewable energy hub comprising a fluid circuit to which at least one turbine adapted to produce electricity is connected, said fluid circuit being located in an offshore rig and being configured to be connected to a wave energy production apparatus, as described before.

In particular, a renewable energy hub may bring, at least one of the following advantages:
I. CAPEX reduction: in a first approach to numbers, six standalone apparatuses may require elements in the region of 60 or more external elements to operate with little efficiency. By using the renewable energy hub, the number may go down to about 16 elements (the size of these elements may be bigger though).
II. OPEX reduction: less elements in the installation, means less in commissioning and decommissioning costs but also less maintenance to perform.
III. Essential weight reduction of the energy producing apparatus: this means that the reciprocating assembly may oscillate with more freedom and, therefore, the apparatus performance (which may be dependent on the mass) may be significantly increased. If the device is lighter than it should be for the state of the ocean, there are mechanisms (such as the Static Compensation Tank) to provide more weight by bringing seawater into the device.
IV. Increased performance: in a poorly energetic ocean, a generator of a standalone energy producing apparatus will operate with little performance (in relation with its capacity).
   By using less generators than energy producing apparatuses, the performance of those may significantly improve and therefore the power delivered by the association of all the energy producing apparatuses.
V. Increased redundancies: six energy producing apparatuses may require, with a TWH, for instance, only three generators. Nevertheless, most of the time, at least one will be idle. This means that maintenance can be conducted in this one and also that there are redundancies available and less time of operation for any of the generators.
VI. Increased safety: a steady platform in the middle of the ocean may be better than a reciprocating device and most of the piping and equipment of stand-alone energy producing apparatuses can lie on the TWH. There is more room for spares, cranes, hoists and all the necessary equipment. There is room for a helipad, offices, etc just in case there will be a big job to perform.
VII. A TWH may also operate or act as a charging station for electrical devices such as drones or ROUV (Remotely operated underwater vehicle).
VIII. Hydrogen production and supply: if there is a need for some energy to be absorbed from the electric grid or a wind farm or other offshore generators connected to the TWH, then the energy producing apparatuses can go into storage mode. Nevertheless, there is only so much energy to store and the power to use can be bigger than what all the energy producing apparatuses can store. Once the devices are fully charged, hydrogen production might start. This hydrogen can be sent to shore but can also be used as a charging device for hydrogen ships, for instance.
IX. A renewable energy hub may also operate or act as a storage only facility. The large weight of all the components in it makes the case very favourable in order to use this big mass to be jacked up operating to store massive amounts of energy, providing extra capacity for accumulation.

According to a **fourth aspect** there is provided a dynamic compensation tank defining at least one aperture on a bottom surface with a movable closure configured to open and establish fluid communication between the dynamic compensation tank(s) and an external body of water in order to allow water to at least partially flood the dynamic compensation tank(s) when the body of water heaves as a result of wave motion and to close fluid communication between the dynamic compensation tank(s) and the external body of water and retain water inside the dynamic compensation tank(s) when the body of water surface sinks as a result of wave motion.

Preferably, the dynamic compensation tank(s) may comprise magnetic means to open and close the movable closure of the at least one aperture.

Additionally or alternatively, the dynamic compensation tank(s) may comprise pneumatic or hydraulic means to open and close the movable closure of the at least one aperture.

The closure may be formed by a ring or plate rotatable around the dynamic compensation tank.

According to a **fifth aspect** there is provided a compression module comprising a cylinder and a piston assembly, wherein the piston divides the cylinder in an upper and a lower chamber and wherein a fluid routing system is connected to the piston and this piston is already connected to a connecting board. An upper rod may be the pathway to connect the fluid routing system to the piston and to the connecting board so that all the pipes are fully accessible.

In an analogue structure, in an internal combustion engine, the pistons reciprocate within the cylinders. However, in this apparatus, the cylinder reciprocates with the action of the ocean waves, whilst the piston remains fixed with respect to the ocean thanks to a connecting board that acts as an interface and is rigidly fixed to the seabed.

The connection between the piston and the connecting board is made with piston rods inside the cylinder lower chamber. Given the expected large size of the pistons, one single rod may not be enough to ensure the stability of the assembly, so instead three or more parallel rods are preferably used.

These rods occupy an area, which defines a volume along a stroke. Therefore, the upper chamber has a greater usable cross-sectional area than the lower chamber. If a pipe is used to shortcut the lower and upper chamber in these circumstances, the system will be hydraulically locked, so it was decided to provide an upper rod in the upper chamber to partially compensate for this difference, but also to allow access to the piston, and to the Connecting Board through the lower piston rods.

If it was fully compensated, there would not be a need for driving fluid accumulation but fluid accumulation can be conveniently used to keep energy in the weak period of generation, (i.e. when the device goes up), and release this energy during the strong period, (i.e. on the way down).

The apparatus may comprise a space below the connecting board where most of the pipe and valve work of the apparatus is located. This may also provide buoyancy to the connecting board to alleviate the weight resting on the jacket.

The compression modules may also be used as part of heavy lifting systems because with a little pressure input, a large amount of lifting force might be achieved.

According to a **sixth aspect,** a specific weight adapter is provided.

The specific weight adapter comprises a fake piston, also called media shutter mechanism, within every cylinder lower chamber separating two different fluids, a liquid which is the driving fluid and a gas, typically nitrogen.

The cylinders in the apparatus are very tall, to allow accumulating large amounts of energy when the apparatus is in storage mode, but the device can also be in generation mode.

To work in energy storage mode, the cylinders need to be filled with a fluid called driving fluid. Nevertheless, filling the cylinders with this fluid is of great advantage when working in storage mode, because the larger the weight the higher the storage capacity.

When the apparatus works in generation mode, that huge amount of weight is no longer an advantage. If the cylinders were filled with driving fluid, the weight of the whole apparatus would be so large, that it would sink or will produce very little power because the power of the waves would not be capable of producing significant motion during the short interaction therewith.

The media shutter mechanism is a (fake) piston that divides the lower chamber of every compression module (the space below the piston in the compression module) into two parts.

Located above the media shutter mechanism, the first part is called the lower chamber liquid phase as it contains the driving fluid. Below the media shutter mechanism is the second part and is called lower chamber gas phase which contains a gas, typically nitrogen.

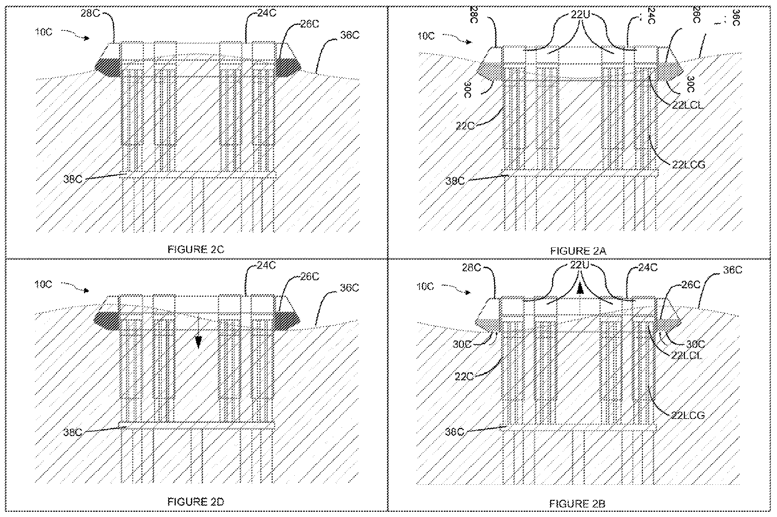

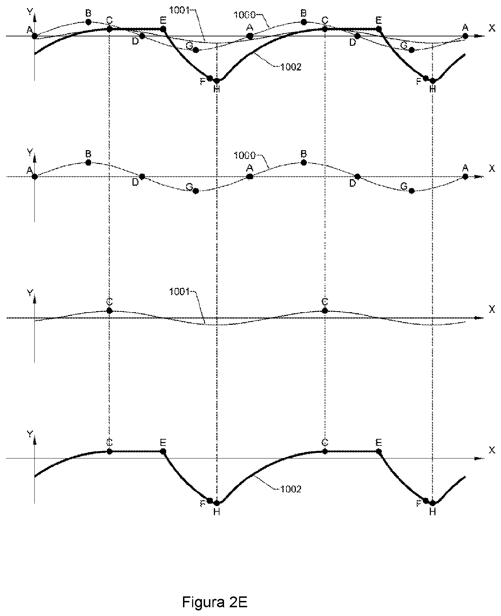

When the device is in generation mode, the media shutter mechanism is positioned as high as practically possible (see Figure 2A), within the lower chambers, thus reducing the weight of the entire reciprocating assembly, because the space that was filled with driving fluid is now filled with gas, of much lower density.

As it can be inferred, the higher the media shutter mechanism, the smaller the specific weight of the reciprocating assembly and the better the performance of the apparatus.

Motion is crucial to produce energy since the mission of the device in generation mode is to produce pressure in the compression modules that extended to the surface of the pistons means a force.

This force along the stroke of the motion means energy that can be extracted in the form of hydraulic or pneumatic power, and represents the basis of the apparatus power take-off.

The media shutter mechanism comprises an inflatable bladder or diaphragm to reversibly adjust the piston at a given height within the lower chambers by filling the bladder with pressurised gas and hence, the bladder pushes against the lower chamber walls, thus creating a seal between the two parts of the lower chamber.

The specific weight adapter comprises a retractable and expandable hose to supply gas to operate the media shutter mechanism from the lower chamber bottom.

According to a **seventh aspect** a fundamental parameters optimisation method is provided.

The fundamental parameters in the apparatus are those most related to the production of power. These are pressure and flow and, in this section, it is explained how these parameters can be optimised in order to minimise the size and thickness of the pipes required to drive the driving fluid throughout the entire system, for a case scenario where the reciprocating assembly comprises six compression modules.

The situation when designing a piping system is that if the pressure increases significantly, the thickness of the pipes conducting the driving fluid must be increased accordingly. If the flow increases significantly, in order to avoid turbulent flow, the diameter of the pipes needs to be increased.

The pressure in the compression modules naturally increases as the reciprocating assembly approaches the crest and the trough of the wave whereas close to the neutral point the speed is maximum and so is the flow. These situations can be managed as follows:
Within the explanation on how the six compression modules are connected we will assume that the pressure that one single compression module can create is 'P' and the flow it displaces is called 'F'. In generation mode, the wave energy producing apparatus works essentially as a pump and as such it has its own characteristic curve. Therefore, the power of the six compression modules (Power = 6·P·F) is affected by such a curve.

### Scheme A

This scheme consists in having all the six compression modules connected in parallel by directing the flow with the appropriate valves in the manifold they are connected to.

This scheme will be automatically implemented when the reciprocating assembly is close to the crest or the trough of the wave because in this situation, the pressure differential would be high and it is convenient to lower it.

Since the pressure is 'P' and all the compression modules are connected in parallel, the total pressure would be approximately equal to 'P'.

Nevertheless, the flow is approximately sixfold higher than the flow that one single compression module can deliver, this would be approximately '6F'.

The power produced by all the compression modules working collaboratively would therefore approximately be: Power = 6·P·F.

### Scheme B

This scheme consists in having two series of three compression modules in parallel.

This scheme may be automatically implemented when the reciprocating assembly is abandoning the crest or the trough of the wave because naturally, in this position, the pressure is lowering but is still high and it needs to be reduced a bit. The flow is increasing though but is still low and the intention is to increase it as well.

Since the pressure is 'P' and we have two series of three compression modules in parallel, the total pressure would be approximately equal to '2P'.

Nevertheless, the flow may be threefold higher than the flow that one single compression module could deliver, this is '3F'.

The power produced by all the compression modules working collaboratively would approximately be, again: Power = (2·P) · (3·F) = 6·P·F

### Scheme C

This scheme consists in having three series of two compression modules in parallel.

This scheme may be automatically implemented when the reciprocating assembly is approaching the neutral part of the wave because, naturally, in this position, the pressure would be low and it needs to be increased a bit and the flow is high and it needs to be decreased a bit too.

Since the pressure is 'P' and we have three series of two compression modules in parallel, the total pressure would be approximately equal to '3P'.

Nevertheless, the flow will be twofold higher than the flow that one single compression module can deliver, this would approximately be '2F'.

The power produced by all the compression modules working collaboratively would still be kept as close to 6·P·F: Power = (3·P) · (2·F) = 6·P·F

### Scheme D

Finally, this scheme consists in having all the compression modules in series.

This scheme may be automatically implemented when the reciprocating assembly is almost at or at the neutral part of the wave because, naturally, in this position, the pressure is very close to zero and it needs to be increased as much as possible and the flow is the maximum it can be reached and it needs to be decreased as much as possible to avoid turbulence in the pipes.

Since the pressure of one single compression module is 'P' and there are six compression modules in series, the total pressure would approximately be '6P'.

Nevertheless, the flow that abandons one compression module will reach the following and so on, so that the flow of the combination for the six compression modules may be equal or approximately the same as the flow for one single compression module, this would approximately be 'F'.

The power produced by all the compression modules working collaboratively would approximately be, therefore 6·P·F: Power = (6·P) · (1·F) = 6·P·F

Therefore, the fundamental parameters optimisation method is a method of adjusting two parameters of a system with a given power input and output, wherein said two parameters, such as pressure and flow, temperature and flow, voltage and current intensity, force and speed, etc. operate in counteracting way, that is, when one parameter increases, the other parameter decreases and vice versa and the power input and/or output is proportional to the product of both parameters, said method consisting of dynamically adapting the interconnections of several power producing units, which in this case are the compression modules, in series, in parallel or in group combinations of power producing units in series and parallel, such that any given output power is exerted by a convenient combination of both parameters adapted to a current situation.

The step of dynamically adapting the interconnections of several power producing units may be realised, for example, by providing a manifold with the appropriate valves and a control system to dynamically adapt the operation of the valves to a particular situation, such that the producing units may be connected either in series, in parallel or in intermediate combinations by grouping the units in series groups, or in parallel groups.

According to an **eighth aspect** a dry submerged cap for protecting valves from corrosive fluid media is provided, said dry submerged cap comprising a fluid entry and a fluid exit.

In order to operate the media shutter mechanism, there is a need for a gas supply, typically nitrogen and/or air. This supply is done underwater. There are valves managing the flow of gas into the dry submerged cap but it is desirable to isolate these valves from the seawater in order to preserve them and maximise service-life.

In order to keep the valves dry underwater, there is a cap covering the valves. If a maintenance operation is required in these valves, the cap is open, the maintenance routine takes place and the whole mechanism is then covered again. Then, compressed gas is sent into the cap using a small pipe and another pipe, both as part of an umbilical, returns the water that leaves the cap as a result of the gas flushing the space under the cap. Eventually, the space below the cap is substantially dry and protected from corrosion under a nitrogen atmosphere and so will be the valves.

According to a **ninth aspect** a quick coupling system is provided.

The apparatus incorporates a quick coupling system that allows the device to quickly latch with an underwater foundation structure by using a connecting board and a series of hydraulic actuators (quick coupling interlocking actuators) that, when triggered, meet orifices in the foundation jacket or underwater structure.

The connecting board, just before being deployed, may comprise auxiliary equipment to connect the connecting board with its underwater foundation structure. This auxiliary equipment may be removed from the connecting board after the connecting operation takes place.

The auxiliary equipment may comprise orientable thrusters and retractable orientation pins and any other means to direct and control the latching operation between the connecting board and the foundation.

First of all, the device is towed using towing eyes installed both, in the connecting board and in the upper deck of the apparatus.

The quick coupling interlocking actuator system may comprise three orientable thrusters to move the connecting board in a horizontal plane with precision.

When the apparatus is close to its target location, the three thrusters position the apparatus precisely in a horizontal plane above the foundation structure and, using the apparatus manoeuvre mode, by pressurising the chambers with driving fluid, the connecting board is positioned until it engages the target foundation structure. This manoeuvre can also be done with gas (potentially air) provided from the renewable energy hub or an auxiliary ship.

To minimise the oscillation during the connecting operation, the static compensation tank may be filled with seawater to increase the inertia and reduce oscillations.

The quick coupling interlocking actuator may comprise two retractable orientation pins to undertake and secure horizontal alignment. Using cameras, triangulation and signs, one of the retractable orientation pins is aligned with an orifice in the resting jacking up support which belongs to the foundation jacket.

When this pin is aligned, a normally hydraulic or pneumatic actuator is triggered. When the connecting board is pivoting around this precise orifice, it is time to align the other retractable orientation pin with a second orifice on the resting support. Again, with the aid of the thrusters and the triangulation procedure, alignment can be achieved and after that, the apparatus only needs to sit on its foundation underwater structure.

The manoeuvre mode, by pressurising the upper chambers of the cylinders, makes this happen using all the available ballasts to reduce vertical oscillation.

The quick coupling interlocking actuator may comprise eight locking cylinders arranged symmetrically in groups of two in four different perpendicular planes each group, so as to latch a connecting board to an underwater foundation structure with a square connecting section.

When the apparatus sits perfectly on its foundation, the quick coupling interlocking actuator is triggered and the cylinders meet the orifices in the foundation structure latching this with the connecting board. This assembly remains latched until it needs to be disconnected.

After this, the auxiliary elements (i.e., thrusters and retractable orientation pins) are no longer needed and may be taken back to shore for a new commissioning operation.

### BRIEF DESCRIPTION OF THE DRAWINGS

The invention will be described in more detail with reference to the accompanying drawings, in which:
- Figure 1A is a perspective view of a first embodiment of the invention located within the ocean, as a collaborative wave energy generation apparatus.
- Figure 1B is a perspective view of a second embodiment of the invention located within the ocean, as a stand-alone wave energy generation apparatus.
- Figures 2A, 2B, 2C and 2D illustrate generally the operation in Generation Mode of one embodiment of the invention.
- Figure 2E illustrates the concept of delaying the downward movement of the reciprocating assembly with respect of the surface of the body of water.
- Figure 3A is a perspective view of a compression module from the embodiment shown in Figure 1A, whereas the media shutter mechanism is located in a high position allowing a decrease of weight.
- Figure 3B is a perspective view of a media shutter mechanism of a compression module from the embodiment shown in Figure 1A, whereas the media shutter mechanism is located in a low position allowing an increase of weight.
- Figure 4A and 4B are a representation of a piston and a cylinder of the compression module shown in Figures 3A and 3B.
- Figure 5 is a perspective view of a connecting board fitted with a quick connection mechanism of the embodiment of Figure 1A/1B.
- Figure 6A and Figure 6B are perspective sectioned views of a dynamic compensation tank in closed and open configurations respectively.
- Figures 6C, 6D and 6E are representations of a closure system of another embodiment of the dynamic compensation tank.
- Figure 7 is a schematic representation of the first and second fluid circuits of the embodiment of Figure 1A/1B.
- Figure 8A a schematic representation of the first fluid circuit of the embodiment of Figure 1A/1B, wherein the compression modules are connected in parallel.
- Figure 8B is schematic representation of the first fluid circuit of the embodiment of Figure 1A/1B, wherein the compression modules are connected in groups of three compression modules, in parallel within each group and the two groups are connected in series between them.
- Figure 8C is a schematic representation of the first fluid circuit of the embodiment of Figure 1A/1B, wherein the compression modules are connected in groups of two compression modules, in parallel within each group and the three groups are connected in series between them.
- Figure 8D is a schematic representation of the first fluid circuit of the embodiment of Figure 1A/1B, wherein the compression modules are connected in series.
- Figure 9A is a schematic representation of the first and second fluid circuits of the embodiment of Figure 1A/1B, wherein the apparatus is in energy generation mode and the reciprocating assembly is moving downwards.
- Figure 9B is a is a schematic representation of the first and second fluid circuits of the embodiment of Figure 1A/1B, wherein the apparatus is in energy absorbing (Storage) mode and the reciprocating assembly is moving upwards.
- Figure 9C is a schematic representation of the first and second fluid circuits of the embodiment of Figure 1A/1B, wherein the apparatus is in manoeuvre mode and the connecting board is moving down to meet the foundation jacket in a commissioning operation.
- Figure 9D is a schematic representation of the first and second fluid circuits of the embodiment of Figure 1A/1B, wherein the apparatus is in locked mode.
- Figure 10 is a perspective view of an energy production facility or association comprising several wave energy production apparatuses and a renewable energy hub.
- Figure 11 is a perspective view of a renewable energy hub.
- Figures 12A, 12B, 12C, 12D illustrate generally the operation of one embodiment of the invention in storage mode.
- Figure 13 shows the watering system that allows to ingress and egress water, normally in storage mode.

### DETAILED DESCRIPTION OF THE INVENTION

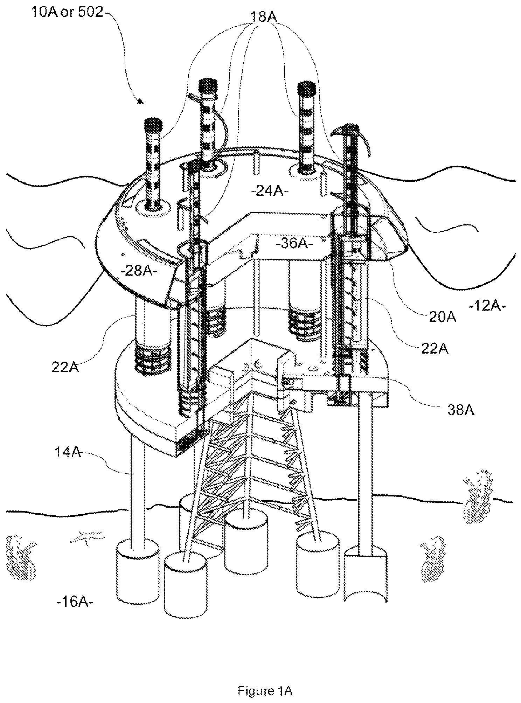

Figure 1A shows a perspective view of an apparatus 10A according to a collaborative first embodiment of the invention located within the ocean 12A and connected to an underwater structure 14A fixedly connected to the seabed 16A. The apparatus 1A would be functionally connected to a renewable energy hub (not shown). By collaborative, it is meant that in order to produce energy, the apparatus needs to be connected to another apparatus or facility.

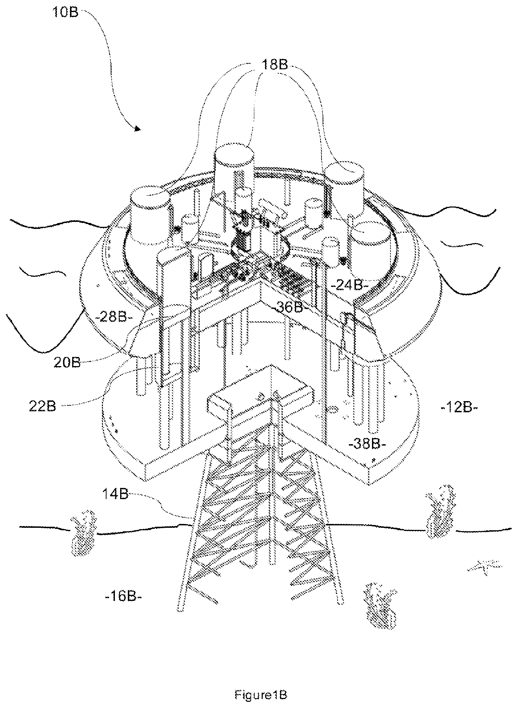

Figure 1B shows a perspective view of an apparatus 10B according to a stand-alone second embodiment of the invention located within the ocean 12B and connected to an underwater structure 14B fixedly connected to the seabed 16B. The apparatus 1B would be functionally independent.

In each Figure 1A and 1B, the apparatus 10A, 10B comprises six compression modules 18A, 18B. Each compression module comprises a piston 20A, 20B and a cylinder 22A, 22B, around which, and solidly connected to them, are located the rest of the elements that, together with the cylinders, constitute the reciprocating assembly 24A, 24B that, in generation mode, reciprocates together with the cylinders 22A, 22B relative to the pistons 20A, 20B of the compression modules 18A, 18B due to the movement caused by the heave and sinking movement of the surface of the body of water.

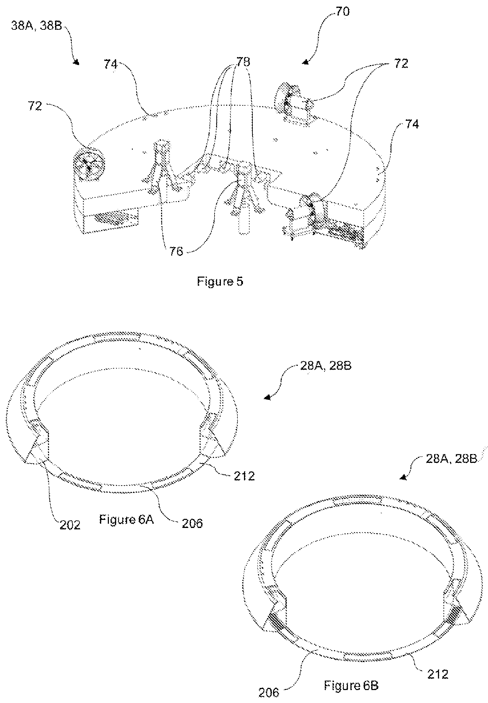

The reciprocating assembly 24A, 24B comprises one dynamic ballast tank 28A, 28B, (shown in Figures 6A and 6B), also known as dynamic compensation tank, which defines six apertures with their respective closures shown in Figures 6A and 6B) configured to open and establish fluid communication between the dynamic ballast tank 28A, 28B and the ocean 12A, 12B in order to allow water to at least partially flood the ballast tank 28A, 28B when the water surface heaves and the reciprocating assembly 24A, 24B moves upward relative to the pistons 20A, 20B and to close fluid communication between the ballast tank 28A, 28B and the ocean 12A, 12B and retain water inside the dynamic ballast tank 28A, 28B when the water surface sinks and the reciprocating assembly 24A, 24B moves downwards relative to the pistons 20A, 20B. The cylinders 22A, 22B of the compression modules 18A, 18B, in use, contain a driving fluid (not shown) that is energised (i.e. pressurised) by the reciprocating movement of the cylinders 22A, 22B, in generation mode (i.e. in use), and said energised fluid is used to produce electric energy. Please note that there may also be embodiments in which a pneumatic fluid is used, instead of a hydraulic fluid.

The reciprocating assembly 24A, 24B also comprises a static ballast tank 36A, 36B, also known as a static compensation tank, located concentrically with the dynamic ballast tank 28a, 28B. The static compensation tank 36A, 36B may be partially filled with seawater (or another fluid), to adjust the buoyancy of the reciprocating assembly 24A, 24B to have an optimal energy production from the apparatus, depending on the ocean wave characteristics. The static compensation tank 36A, 36B is a hollow flat cylinder located in the lower part of the reciprocating assembly 24 that is most likely to be used in storage mode to increase the potential energy.

In Figure 1A, each compression module 18A is supported on the connecting board 38A by means of three piston rods 40, respectively.

The connecting board 38A is reversibly connected by a quick latching or connection mechanism to the upper part of an underwater structure 14A, in use, fixedly connected to the seabed 16A.

Figures 2A to 2D are side views to illustrate the general principles of operation of this invention. Figure 2A shows another embodiment 10C of the invention in located in the deep ocean.

As in the embodiments shown in Figures 1A and 1B, the reciprocating assembly 24C is supported on the connecting board 38C. When the ocean surface beneath the reciprocating assembly 24C is a valley of a wave, the reciprocating assembly 24C is in its lowest position, as shown in Figure 2A. At this stage, the apertures 30C of the reciprocating assembly 24C are
open (i.e. not covered by the movable closures) and ready to let seawater ingress into the dynamic compensation tank 28C while the whole reciprocating assembly 24C, including the cylinders 22C, is pushed upwards by the incoming wave 36C, as shown in Figure 2B. It can be clearly seen that an upper chamber 22UC of the cylinders 22C decreases in size, and therefore the fluid in it is pressurised, while at the same time, the lower chambers 22LC increase in size and the pressure in the fluid within decreases. This pressure differences make the fluid move through a piping circuit and eventually generate electricity.

When the water surface beneath the reciprocating assembly 24C is a wave crest, as in Figure 2C, the water level 26C within the dynamic compensation tank 28C has reached a maximum and the apertures 30C of the dynamic compensation tank 28C may be closed in order to retain that amount of water for the next stage.

Finally, the water surface beneath the reciprocating assembly 24C is becoming a valley again, as seen in Figure 2D, and then, the reciprocating assembly 24C moves downwards, with an increased amount of water in the dynamic compensation tank 28C, while the fluid pressure in the upper chambers 22UC starts decreasing and the pressure in the lower chambers 22LC starts increasing and a new cycle starts again.

Figure 2D illustrates the concept of delaying the downward movement of the reciprocating assembly with respect of the sinking movement of the surface of the body of water.

When a buoyant body, such as the reciprocating assembly, rises as a consequence of the heave of a wave, it acquires, among others, potential energy. On its way down, the interaction with the wave is, however, detrimental for recovering the potential energy into the system. Basically, if the wave was not there once the buoyant body reaches its highest position, there will be a freefall with a bigger acceleration.

This acceleration, together with the mass along the stroke, would result in a bigger production of power since the energy can be delivered faster.

One of the aims of the apparatus is to delay the fall slightly, with respect of the sinking movement of the waves.

Figure 2D shows time in the X axis and height in the Y axis and contains the following curves:
- Thinnest curve 1000 corresponds to the shape of the wave.
- Next thicker curve 1001 corresponds to the expected behaviour of a floating device if no modifications were made. It can be observed that between the curves 1000 and 1001 there is a phase as a result of the inertia (horizontal distance between points B and C). Also, the crest of the curve 1001 does not match in height with the crest of the wave curve 1000. This is because the power of the wave in the rising period only acts during half of the period of the wave, not giving the opportunity to the buoyant device to reach the highest point of the wave trajectory.
- The thickest curve 1002 corresponds to the forced behaviour that defines this strategy. Once the buoyant body reaches its crest (point C), the buoyant body gets locked in that position, until point E is reached. Then, the body falls with a bigger acceleration. Once the body reaches point F, its inertia will make it sink until point H and bounce with the action of the hydraulic thrust. The new cycle commences with the rise period that will take the buoyant body to point C.

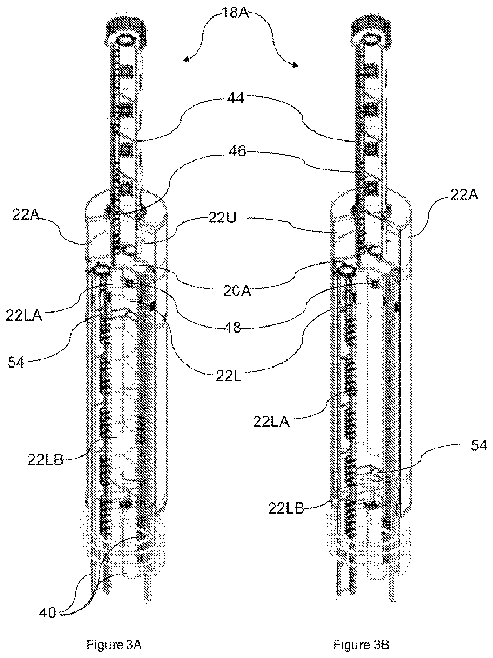

Figure 3A shows a perspective view of a compression module 18A of the apparatus shown in Figure 1A. The compression module 18A and the cylinder 22A are divided by the piston 20A in an upper chamber 22U and a lower chamber 22L. Each compression module 18A is supported on the connecting board 38A by means of three piston rods 40. Additionally, there is an upper piston rod 44 coming from the upper part of the piston 20A through the upper chamber 22U that partially compensates the volume occupied by the lower piston rods 40 in the lower chamber. These rods 40, 44 facilitate access to the connecting board machinery room, adds structural integrity, and allows inspection of both the upper and lower chamber.

In each compression module 18A, one of the three lower piston rods 40 is hollow and in it there are internal ladders 46 with guardrails for accessing the connecting board 38 from the top of the compression modules 18A. Besides there are inspection windows 48 that allow a visual inspection of the upper and lower chambers 22U, 22L. At the bottom of the ladders there is a hatch that gives access to the ocean outside of the lower part of the piston rod 40.

The lower chamber 22L and the upper chamber 22U of the compression modules 18A are filled with a fluid (not shown).

So as to reduce the amount of driving fluid (not shown) within the lower chamber 22U, this comprises a media shutter mechanism 54. A media shutter mechanism 54 is basically a hermetic partition in the lower chamber 22L that divides it in a first lower chamber part 22LA filled with driving fluid and second lower chamber part 22LB filled with gas, which may be nitrogen. In embodiments wherein the driving fluid is a gas, the media shutter mechanism may not be required.

The media shutter mechanism 54 is shown in Figure 3B in a low position, thereby increasing the specific weight of the compression module 18A, whereas in Figure 3A, the media shutter mechanism 54 is in a higher position, thereby reducing the specific weight of the compression module 18A. The media shutter mechanism 54 comprises an inflatable seal (bladder or diaphragm) that allows a movable gas tight partition of the lower chamber 22L in two parts. In this way, the specific weight of the compression module 18A may be adjusted to the operation requirements of the apparatus 10A and therefore this system can be considered as a second weight changing mechanism.

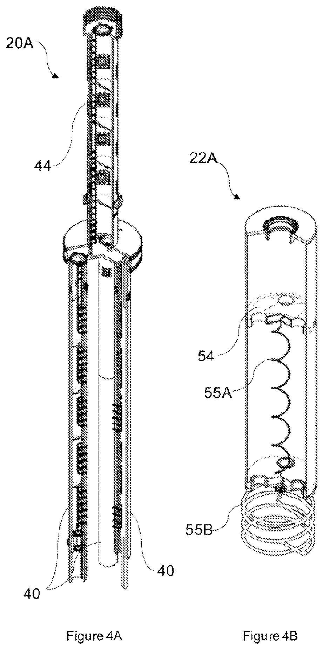

For clarity, Figures 4A and 4b show respectively a piston 20A, with an upper rod 44 and three lower rods 40 and a cylinder 22A separately. Retractable hoses 55A, 55B supply nitrogen to the inflatable seal of the media shutter mechanism 54 and to the second lower chamber part 22LB, respectively.

Figure 5 is a perspective view of the auxiliary equipment to be used during a commissioning of the apparatus, showing a connecting board 38A, 38B fitted with a quick coupling interlocking mechanism 70 to connect the apparatus 10A, 10B to an underwater structure 14A, 14B. The connecting board 38A, 38B initially comprises three thrusters 72 located at regular intervals at the edge of the connecting board 38A, 38B. These thrusters 72 are used in the apparatus installation procedure to locate on the xy plane (horizontal plane) the connecting board 38A, 38B and the rest of the apparatus 10A, 10B with respect to the underwater structure 14A, 14B to which it is going to be coupled. Additionally, there are three sets of towing eyes 74 from which the connecting board 38A, 38B can be moved by pulling from attached towing lines (not visible).

During the commissioning of the apparatus, the connecting board 38A, 38B further comprises two retractable orientation pins 76, so as to perform an angular position match between the connecting board and the underwater structure. To do this, first, one retractable pin is inserted in a corresponding hole in the underwater structure 14A, 14B and then the thrusters 72 are used to rotate the connecting board 38A, 38B over the inserted pin until the second pin is aligned with a second hole in the underwater structure 14A, 14B, at which moment, the second pin is actuated and inserted in the second hole. This locks the angular position of the connecting board 38A, 38B and the rest of the apparatus with respect to the underwater structure.

This is followed by the submersion of the pistons 22A, 22B, piston rods 40 and the connecting board 38A, 38B by pressuring the fluid in the upper chambers 22U at a depth at which the horizontal interlocking pins 78 are aligned with the corresponding holes in the underwater structure 14A, 14B and at such moment they can be hydraulically inserted therein.

Note that the process of installing the apparatus 10A, 10B on the underwater structure 14A, 14B (fixed assembly) is reversible, and therefore, if extremely devastating weather is foreseen, such as a hurricane, the apparatus 10A, 10B can be decoupled from the underwater structure and taken to a safe harbour. Alternatively, it can be taken to locations where wave energy is more favourable depending on its seasonality or to evacuate the apparatus in cases of natural catastrophes, such as earthquakes, tsunamis, etc. or simply be disconnected to bring it to shore for major repairs.

Note also that, when jacked up, the apparatus can remain at some 15 meters above the sea level. This means that waves of more than 30 meters in height are required to start jeopardising the integrity of the device.

Figures 6A and 6B show a sectioned view of the dynamic compensation tank 28A, 28B which defines several apertures 202 on a bottom surface, each aperture provided with a movable closure 206 configured to open and establish fluid communication between the dynamic compensation tank 28A, 28B and the ocean in order to allow water to at least partially flood the dynamic compensation tank 28A, 28B when the ocean heaves as a result of wave motion and to close fluid communication between the dynamic compensation tank 28A, 28B and the ocean and retain water inside the dynamic compensation tank 28A, 28B when the ocean surface sinks as a result of wave motion.

The dynamic compensation tank 28A, 28B comprises magnetic means to open and close the movable closures 206 of the apertures 202.

The movable closures are formed by a ring 212 rotatable around the dynamic compensation tank 28A, 28B. The rotation of the ring 212 is caused by magnetic forces acting on the ring 212, which displace the closures 206 between an open (Fig. 6B) and closed (Fig. 6A) position and vice versa, when needed.

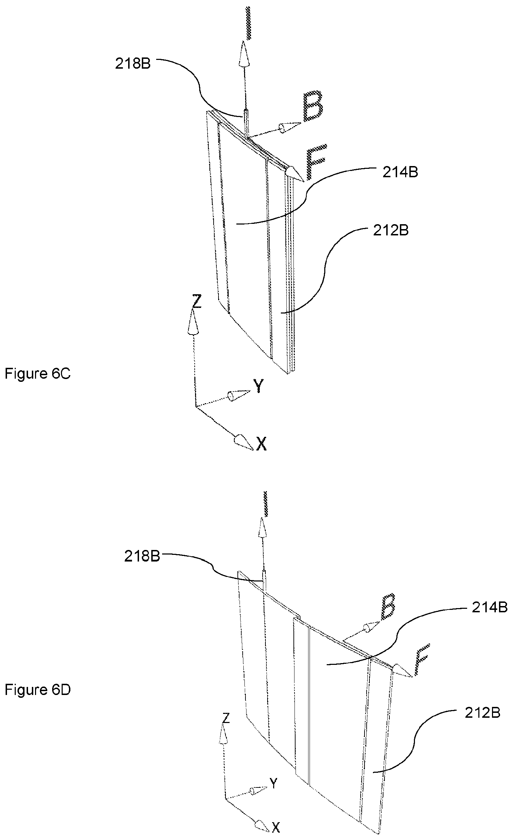

In other embodiments, such as that shown in Figures 6C and 6D, the at least one closure comprises a rotating plate 212B with one or more permanent magnets 214B solidarily attached thereto and a cable 218B or a series of cables connected in parallel and arranged in the inner surface of the buoyant cylinder (not numbered) along the rotating plate perpendicularly to the rotating movement, that transmit an electric current to activate the rotating motion of the plate.

When the dynamic compensation tank is sectioned (see Figures 6C and 6D), there is a rotating plate 212B. This rotating plate 212B has permanent magnets 214B creating a magnetic field B. There are also vertical cables 218B in the lower wall of the buoyant cylinder.

Lorentz force law says that when the magnetic flux B in Y axis intercepts a current in Z axis (carried by the cable 218B), a force F will be induced in the X axis direction, thus creating a torque in the rotating plate and making it turn.

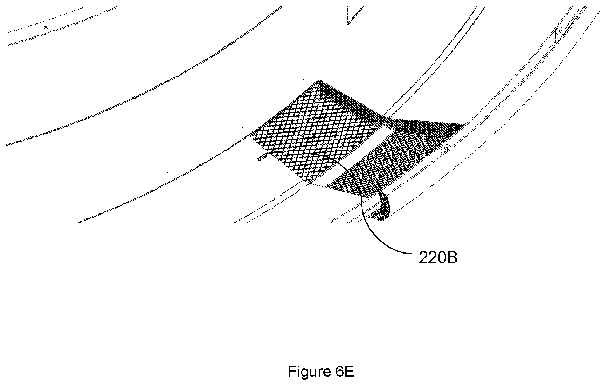

Since the rotating plate 212B or the ring 212 are almost constantly rotating within the dynamic compensation tank, in one sense or the opposite sense, it has gratings 220B (Figure 6E) to avoid marine wildlife accidentally entering the dynamic compensation tank. If this grating was not there, mammals and fish could enter the ballast tank and get trapped between the dynamic compensation tank and the rotating plate due to the relative motion that is kept between them both as the rotating plate rotates.

To clean biofouling the easiest approach is to position bristles attached to the rotating plate rotates and brushes the gratings, thus avoiding the formation of colonies around the gratings that will eventually close the path for the water transfer to take place.

### The Fluid Routing System 200

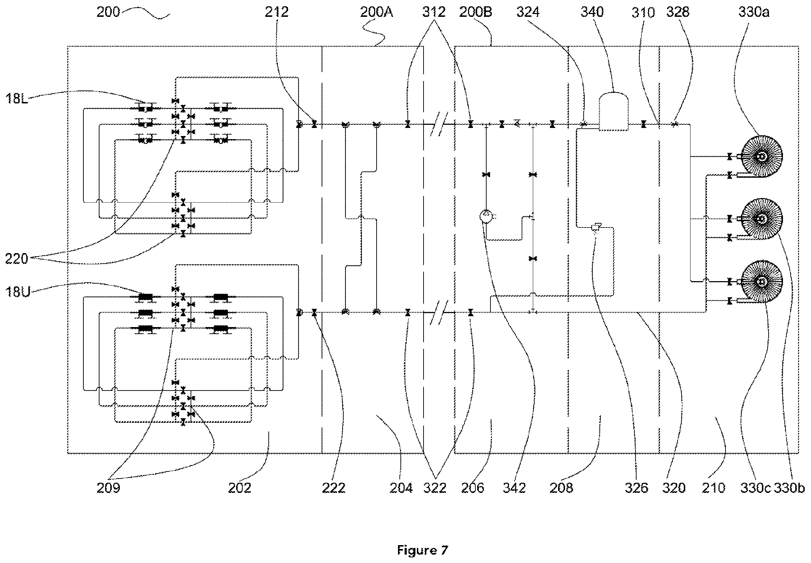

Before presenting the different operating modes of the invention, it is necessary to understand the pipework and valve connections that allow the operation thereof. This is what is called the fluid routing system, shown in Figure 7.

The fluid routing system 200 consists of a first fluid circuit 200A and a second fluid circuit 200B, and they are subdivided into a few fluid subsystems, namely:
- The grouping chamber subsystem 202
- The routing subsystem 204
- The reversible manoeuvre subsystem 206
- The storage subsystem 208; and
- The delivery subsystem 210

The grouping chamber subsystem 202 and the routing subsystem form part of a first fluid circuit 200A and the reversible manoeuvre subsystem 206, the storage subsystem 208, and the delivery subsystem 210 form part of a second fluid circuit 200B.

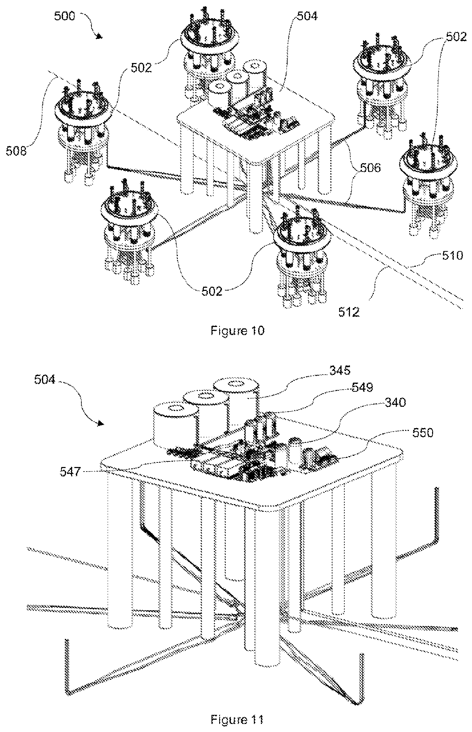

In practice, the first 200A and second circuits 200B may be located in the same apparatus 10B (Figure 1B) or, preferably, only the first circuit 200A is located in an apparatus 10A (Figure 1A) with the second circuit being located in a separate location (a renewable energy hub in Figure 10 and 11), as it will be described below.

### The Grouping Chamber Subsystem (GCSS) 202

This subsystem 202 connects by means of manifolds 209, 220 all the compression modules 18 (including 18A and 18B) upper and lower chambers to a single output, respectively, thus leading to valve 222, called upper chambers valve (VUC) that fluidly connects all the upper chambers 22U and to a valve 212, called lower chambers valve (VLC) that fluidly connects all the lower chambers 22L.

### The routing subsystem (RSS) 204

All the fluid flows of the upper and lower chambers 22U, 22L of all the compression modules 18 are joined at a single valve 212, 222, respectively.

The pressure at the lower chambers valve 212 is continuously changing from high to low- and to high-pressure again due to the reciprocating movement of the reciprocating assembly 24 (including 24A and 24B) and the cylinders 22 (including 22a and 22B), and simultaneously, the opposite is happening at the upper chambers valve 222, where the pressure is low, high and low again, respectively.

The routing subsystem (RSS) 204 is configured to deliver high- and low-pressure fluid consistently to the respective same points of a second circuit 310, 320, at the high- pressure valve (VHP) 312 and the low-pressure valve (VLP) 322.

Therefore, the fluid flow goes straight from VLC to VHP if the reciprocating assembly 24 is moving upwards in which case, VUC and VLP will also be connected.

If the reciprocating assembly 24 is moving downwards, the high-pressure flow leaves the VUC and will be diverted to VHP whilst the low-pressure flow will leave the VLP and will be diverted to VLC.

There is a valve 324, named regulation valve to the storage subsystem (RVSS) that constrains the fluid accumulation in the buffer tank 340 in order to synchronise the harmonic movement of the reciprocating assembly 24 with the parameters coming from the waves in the ocean.

Basically, this valve 324 is intended to create a friction that delays the flow in order to synchronise in phase and frequency as much as possible the motions of both, the reciprocating assembly 24 and the waves, to maximise energy production.

### The Reversible Manoeuvre Subsystem (RMSS) 206

The purpose of this system is to provide pressurised fluid by the action of one or more pumps 342 to the compression modules to jack-up the reciprocating assembly 24 during harsh conditions, as a result of an energy storage operation or during operations of connections and disconnections.

### The Storage Subsystem (SSS) 208

In energy generation and manoeuvre modes, the buffer tank(s) 340 (which can also be named pressure vessel) accumulates or releases fluid from/to the fluid circuit in order to compensate for the different volumes that both the upper and lower chambers can simultaneously displace.

At least one of the buffer tank(s) 340 comprises a membrane (not shown) to separate the hydraulic part which is the fluid, from the pneumatic part, which is a bubble of gas, typically nitrogen, that compresses and decompresses allowing storing energy in the form of pneumatic pressure.

This helps the reciprocating assembly 24 to rise on the way up because the buffer tank(s) 340 will recover or release the excess of energy that was stored as the reciprocating assembly 24 was on its way down.

In locked mode, the buffer tank 340 needs to be isolated and locked in order to stop the fluid flow.

Still belonging to the storage subsystem 208, the regulation valve 328 (VOHPT) has been allocated after the pipe that connects the compensation or buffer tank(s) 340 to the DSS in order to provide regular flow and pressure to the turbines 330a, 330b, 330c.

Apart from the accumulation tank(s) 340 and piping in this storage subsystem 208, there is also a so-called overpressure release mechanism (ORM). This is the pipe that connect the high-pressure branch 310 with the low-pressure branch 320 by means of a safety valve 326 (SV) which is tared and only allows the gradient of pressure between the two branches to reach a certain value.

If this value is exceeded, the safety valve 326 (SV) will allow the fluid to flow from high to low pressure branches, alleviating the extreme difference of pressure and hence protecting the whole apparatus. There is a locking command to all the 4 3-way valves in the RSS (Routing Subsystem) 204 remaining in whichever position they were to stop the system from building up more pressure.

### The Delivery Subsystem (DSS) 210

The DSS (Delivery Subsystem) 210 consists of three turbo-generators 330a, 330b, 330c. If the sea state is calm, i.e. not particularly energetic, and there is not much power to harness, the compression modules 18 might be delivering power to only one or two turbo-generator(s).

As a result of this, not only the other generator(s) will be idle but the performance of the running generator may increase because the production rate will be closer to the optimum as a result of the contributions of all compression modules 18.

Typically, a wind turbine has a very tight nacelle where one single generator is enclosed and despite the fact that the generator on its own, is not the main cause of faults for wind turbines, it is also clear that repairing a generator in the wind turbine means stopping supply. This may not happen in this embodiment, because there are three generators, and if one is broken or needs maintenance, the others can be in supply mode, or vice versa.

Figure 7 shows schematic representation of the fluid routing system 200 comprising the first and second fluid circuits 200A, 200B of the embodiment of Figure 1B. The first fluid circuit 200A is shown on the left side and the second fluid circuit 200B is shown on the right. The second fluid circuit 200B comprises a high-pressure branch 310 and a low-pressure branch 320.

In the grouping chamber subsystem (GCSS) 202, the first fluid circuit 200A comprises all the pipes and valves that interconnect all the upper chambers 22U and all the lower chambers 22L of the six compression modules 18A. The first fluid circuit 200A comprises two lower chambers manifold 209 and two upper chambers manifold 220.

In the routing subsystem (RSS) 204, the lower chambers manifold 220 of the first fluid circuit 200A is connected via a three-way valve 212 directly to the high-pressure branch 310 of the second circuit 200B. On the other side, the upper chambers' branch of the first circuit 200A is connected via a three-way valve directly to the low-pressure branch 320 of the second circuit 200B.

Additionally, in the routing subsystem (RSS) 204, at the interface between the first fluid circuit 200A and the second fluid circuit 300 there are two pipe branches 250a, 250b fitted with three-way valves 252 that interconnect the lower chambers manifold 209 with the low-pressure branch 320 of the second circuit 200B and the upper chambers manifold 220 with the high-pressure branch 310 of the second fluid circuit 200B.

The routing subsystem (RSS) 204 comprises an automatic control system (not shown) that switches the connections between the grouping chambers subsystem and the second circuits 202, 200B in a manner that fluid at high pressure from the first circuit 200A is always delivered to the high-pressure branch 310 of the second circuit, regardless of its origin in the upper chambers manifold 209 or the lower chambers manifold 220. Simultaneously, the low-pressure fluid is always delivered from the low-pressure branch 320 to any of the upper chambers' manifold 220 or the lower chambers manifold 209 that is at low pressure at any given moment.

Therefore, in energy production mode, there is a flow of fluid in the second circuit 200B from the high-pressure branch 310 towards the low-pressure branch 320 which is used to move one, two or three turbo-generators 330a, 330b, 330c connected in parallel and located between the high-pressure branch 310 and the low-pressure branch 320, depending on the available wave energy, which form the delivery subsystem (DSS) 210.

In addition, there is a buffer tank 340, also known as accumulation tank, in the second circuit 200B that serves to store or supply surplus fluid to the first and second fluid circuits 200A, 200B in order to provide a reservoir or a container for unbalance fluid resulting from the fact that the lower and upper chambers have different cross-sectional area, and thus, displace different volumes of fluid per unit of length in their movement.

In addition, there are three atmospheric tanks 345 (see Figure 11), in the second circuit 200B that serves to store or supply surplus fluid to the compression modules in order to switch from generation to storing mode.

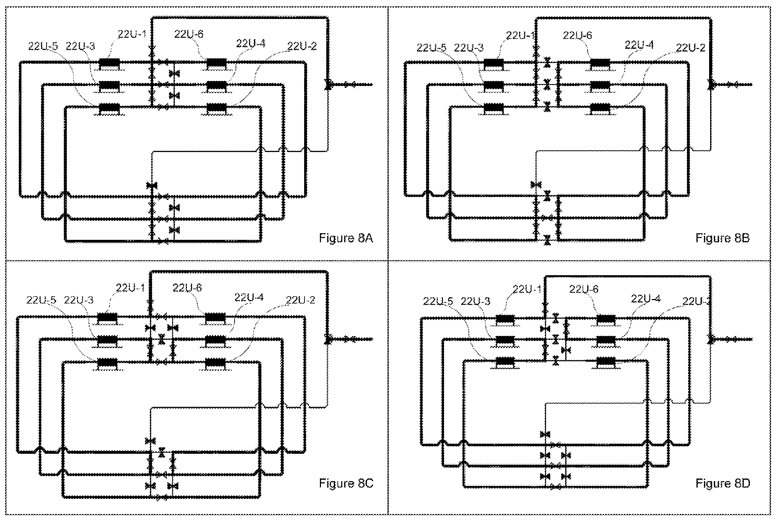

Figures 8A, 8B, 8C and 8D show how the upper chambers 22U-1, 22U-2, 22U-3, 22U-4, 22U5, 22U-6 are automatically interconnected to compensate the variations in flow and pressure of the fluid when the reciprocating assembly and the cylinders are moving between their upper, intermediate and lower positions in each reciprocating cycle.

Figure 8A shows the interconnections between the upper chambers 22U in the first circuit 200A is the sum of all the flows through each chamber (i.e. the maximum possible flow) and the pressure difference in the first circuit 200A is the difference between the pressure in the upper chambers 22U and the pressure in the lower chambers 22L, or vice versa, and is therefore minimised. (In order to create Scheme A - seventh aspect of the invention)

Figures 8B (Scheme B) and 8C (Scheme C) show the interconnections between the upper chambers 22U in the first circuit 200A when the reciprocating assembly 24 is in a position between an extreme position and the intermediate position, in each reciprocating cycle. In this situation, the flow in and out of the upper and lower chambers 22U, 22L, or vice versa, is between a maximum and a minimum, because the reciprocating assembly 24 is moving at a speed between its lowest and fastest speed in each reciprocating cycle.

Conversely, the pressure difference between the upper and lower chambers 22U, 22L, or vice versa, is at a value between its maximum and its minimum in each reciprocating cycle. Therefore, it makes sense, that in order to compensate a situation with intermediate flow and intermediate pressure difference, to connect in parallel the upper chambers 22U and the lower chambers 22L within groups, and the groups should be connected in series among them, as shown, so that the total flow entering the first circuit 200A is the sum of all the flows of every chamber group that are connected in parallel (i.e. an intermediate flow) and the pressure difference in the first circuit 200A is the difference between the pressure in every upper chambers group that are connected in series and the pressure in every lower chambers group, or vice versa, and is therefore intermediate.

Figure 8D shows the interconnections between the upper chambers in the first circuit 200A when the reciprocating assembly 24 is in an intermediate position (maximum speed) between its highest and lowest position in a reciprocating cycle. In this situation, the flow out (or in) of the upper (and lower) chambers 22U, is maximum, because the reciprocating assembly is moving at its highest speed. Conversely, the pressure difference between the upper and lower chambers, or vice versa, 22U, 22L is at its minimum. Therefore, it makes sense that in order to compensate a situation with maximum flow and minimum pressure difference, we should connect all the upper chambers 22U and all the lower chambers 22L in the compression modules 18 in series, so that the total flow entering the first circuit 200A is the flow through each chamber (i.e. the minimum possible flow) and the pressure difference in the first circuit 200A is the difference between the sum of all the pressures in the upper chambers 22U and the sum of all the pressures in the lower chambers 22L, or vice versa, and is therefore maximised.

In this way, the automatic interconnections shown in Figures 8A to 8D allow the production of a large amount of power, which is dependent on the product of flow times pressure, without having to size the first circuit for a very high pressure and a very high flow, because when the pressure difference between the chambers is very high, this is minimised by connecting every chamber in each compression module in parallel and when there is a very large flow, the flow in the first circuit is equal to the flow in each chamber because they are connected in series, to compensate for the high flow. In each situation, either the flow is six times higher or the pressure difference is 6 times higher, when there are six compression modules, and therefore the power output from the first circuit 200A to the second circuit 200B is always the same, i.e. either 6F x P (Figure 6A), or F x 6P (Figure 6D), or intermediate situations such as 3F x 2P or 2F x 3P, in which the compression modules are grouped in two different ways (see Figures 8B and 8C, respectively):
- a) association in series of two groups of three parallel compression modules where each group is formed by three compression modules in parallel (Figure 8B); or
- b) association in series of three groups of two parallel compression modules where each group is formed by two compression modules in parallel (See Figure 8C).

Since there are six compression modules, when they need to be connected in two groups of three or in three groups of two, the best way to interconnect them, in order to have a better structural stability and more homogeneous stress distribution in the apparatus, is to combine them symmetrically, i.e. when there are three compression module groups connected in series, each compression module is connected in parallel with the compression module situated diametrically opposed to it (for example in Figure 8D this is shown by connecting 22U1 and 22U-6, 22U-3 and 22-U-4 and 22U-5 and 22U-2) and, when there are two groups connected in series, each compression module in each group is connected in parallel with the alternating compression modules. i.e., with those forming a regular triangle with it (for example in Figure 8C this is shown by connecting 22U-1 with 22U-3 and 22U-5; and by connecting 22U-2 with 22U-4 and 22U-6).

**Operating Modes of the Apparatus** (these are valid for both associative apparatus 10A or stand-alone apparatus 10B and therefore numerals, where appropriate, should be understood an encompassing both A and B embodiments)

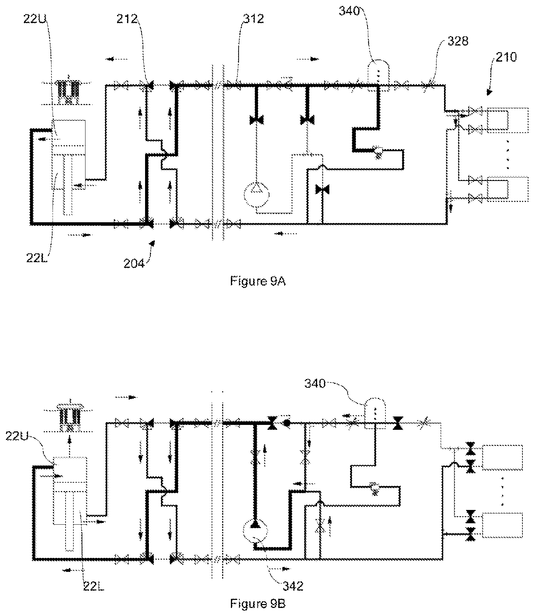

### Energy Generation Mode (Figure 9A)

Figure 9A shows the fluid flows that take place in the fluid routing system when the apparatus 10 is in energy generation mode and the reciprocating assembly is moving downwards.

In the energy generation mode, the media shutter mechanism needs to be lifted in order to displace the excess of fluid out of the compression modules.

As the reciprocating assembly 24 and therefore the cylinders 22 move downwards, a huge fluid flow abandons the upper chambers 22U, is diverted to the VHP 312 and runs straight to the accumulation tank(s) 340 where part of the volume is accumulated compressing the pneumatic membrane, hence accumulating energy.

The fluid flow that leaves the tank 340 cannot be higher than what the lower chambers 22L of the compression modules 18 can accommodate, hence part of the fluid needs to remain in the tank.

The regulation valve VOHPT 328 moderates the fluid output from the tank 340 providing a regular flow and pressure to the DSS (Delivery Subsystem) 210 which in turn converts the hydraulic energy into electricity.

The flow on its way back is diverted by the RSS (Routing Subsystem) 204 to VLC 212 first and from there to all the compression modules 18.

The difference with what happens on the way up, are that the flow circulates straight in the RSS (Routing Subsystem) 204 and that the lower flow produced when the high pressure is generated by the lower chambers 22L is complemented by the excess of volume and energy that was stored in the accumulation tank 340 during the previous way down.

### Energy Storing Mode (Figure 9B)

In the storing mode, the apparatus 10 receives energy, uses its manoeuvre mode to jack up the reciprocating assembly 24 and by doing so it absorbs electric energy and accumulates it as potential energy.

Before entering in storing mode, the specific weight adapter needs to lower the media shutter mechanism to fill the cylinders with fluid, thus enlarging the stroke.

This mode provides flexibility to ramp up or ramp down power (because the weight of the device may vary substantially, in the region of twenty folds, depending on the filling status of the ballast tanks and these can be filled at the beginning of the lifting up process with a big demand of energy, when the Reciprocating Assembly has reached its highest point or even in between thanks to the watering system). The time to absorb/deliver the energy can also be regulated to deal with different scenarios of demand/supply.

Additionally, the tidal range might be used to potentially deliver more energy than what it was initially absorbed from the grid or at least to improve the performance.

Figure 9B shows the apparatus in energy storing mode, where it can be seen that the reciprocating assembly is taken to an elevated position storing energy as potential energy of the water contained in the dynamic and static compensation tanks 28, 36. (that can be initially or finally increased by ingression of water in the dynamic and static compensation tanks 28, 36)

Figure 9B is a schematic of the first and second fluid circuits wherein the apparatus is in energy storing mode and it can be seen how the pump 342 sends fluid from the lower chambers 22L and the excess volume in the pressure-vessels 340 to the upper chambers 22U in order to raise the reciprocating assembly 24 and store energy in form of potential energy.

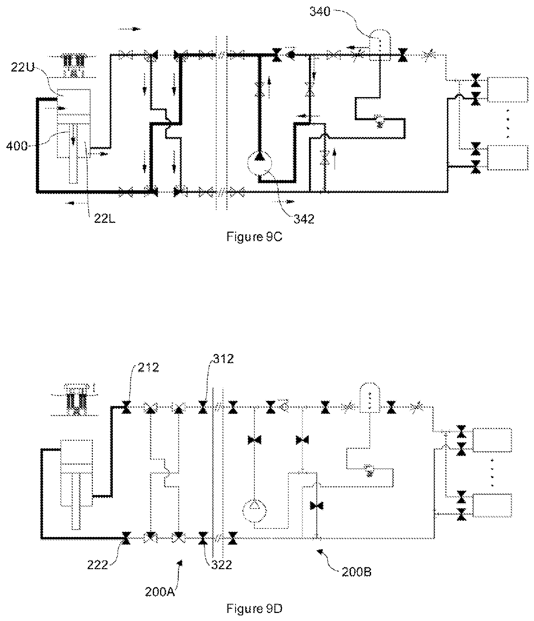

### Manoeuvre Mode (Figure 9C)

In the manoeuvre mode, shown in Figure 9C, the apparatus 10 pumps driving fluid coming from both the lower chamber and the pressure-vessels 340. This fluid will reach the VHP 312 and travel into the first circuit 200 throughout the RSS (Routing Subsystem) 204 to the upper chambers 22U to be pressurised.

If the pressurised chambers are the upper chambers 22U and the connecting board 38 is latched to the underwater structure 14 (including 14A and 14B), the whole reciprocating assembly 24 is raised, entering in storing mode, but if the connecting board 38 is not latched, then the pistons 20 with the connecting board 38 attached descend (As indicated by arrow 400), for example, to meet the underwater structure 14 and be engaged (latched) with it.

During the commissioning process, rather than using the final routing fluid, air may be compressed creating the required motion and once the device is latched, the routing fluid can be pumped into the system removing all the air in it.

It does not make a lot of sense to use the manoeuvre mode to pressurise the lower chambers 22L if the connecting board 38 is latched to the pistons 20 but it does make sense if it is not, because it will allow the connecting board 38 to raise.

### Locked Mode (Figure 9D)

In locked mode (Figure 9D), the apparatus 10 is hydraulically locked, which is accomplished by closing VUC 222 and VLC 212 but also VHP 312 and VLP 322. This way there will be no flow between the first 200A and second circuits 200B.

This mode can have a few uses, being the most important to store the potential energy when the reciprocating assembly 24 has been lifted up with or without ballast weight, and maybe waiting to be fully loaded with potential energy if the dynamic and/or static ballast tanks 28, 36 were not completely full of seawater.

If the ballast tanks 28, 36 are full, then the locked mode serves to keep the energy in place until it is worth delivering the energy to the grid. This is based on the large oscillations the prices of energy experience along the day.

Another use could be for maintenance purposes, or just to remain jacked up in harsh conditions away from storm surges.

Besides the main modes of operation described above, there are two additional modes in which the apparatus 10A, 10B might be encountered: the "In-transit" mode takes place when the device, being decoupled from the foundation jacket, is being towed for any purpose (first installation, relocation, severe storm forecast, maintenance, etc.). To do this, the connecting board will be as close as possible to the bottom of the reciprocating assembly to minimise the dragging force from the water; and the *idle mode* which takes place when the pressure difference in the second circuit between the high-pressure branch and the low pressure branch is above a certain limit and the security valve opens, then the valves in the routing subsystem are blocked, so that the pressure difference in the second circuit cannot be increased any further.

### Wave energy production association and renewable energy hub

One standalone wave energy producing apparatus (see Figure 1B) can be subdivided into two devices, according to their functionality. One device being the pressure generator (associative wave energy apparatus 10A or 502 shown in Figure 1A) whereas the other is the manoeuvre and electrical generation unit (renewable energy hub 504 shown in Figure 11). The pressure generator, which is technically a pump or a compressor for pneumatic realisations, needs to reciprocate in order to convert the energy of the waves into pressure, but the manoeuvre and electrical generation unit does not need to reciprocate and could be separately located on a fixed structure: the renewable energy hub 504.

Figure 10 illustrates this idea from the preceding paragraph and shows a perspective view of an energy production association or facility 500 comprising several associative wave energy production apparatuses 502 and a renewable energy hub 504.

The energy production association or facility 500 is another embodiment of the invention wherein the generation of pressurised fluid and the generation of electric energy therefrom happens at two distinct locations, in the wave energy production apparatuses 502 and a renewable energy hub 504, respectively. The pressurised fluid generated in the wave energy production apparatuses 502 is sent through hoses 506 to the renewable energy hub 504, where the pressurised fluid flows through a second circuit and drives one or more turbines to generate electricity. This renewable energy hub can be mobile, sitting on a lorry, for instance or can be onshore to be used in harbours, as an example.

Additionally, the renewable energy hub 504 receives electric energy from a nearby offshore wind farm through a power line 508. Besides, the renewable energy hub sends and receives electric energy to/from shore through another power line 510. Alternatively, the renewable energy hub can send energy to shore in the form of hydrogen, which has been produced in the renewable energy hub using the electricity produced, through a previously existing pipeline 512. This pipeline can also be used to import/export CO₂ or other compatible gases. If the renewable energy hub is sitting on an old well, the well can potentially be repurposed to inject CO₂ for carbon sequestration.

Figure 1A is a perspective view of a wave energy production apparatus 10A or 502 to be included in association with a renewable energy hub 504. The wave energy production apparatus 502 comprises all elements associated with the driving fluid pressurisation, like the compression modules 18A and the reciprocating assembly 24A.

Figure 11 is a perspective view of a renewable energy hub 504. The renewable energy hub 504 comprises all elements associated with the generation and management of electric energy, at least partly resulting from the pressurised driving fluid, like turbines 547 and pressurised accumulations tanks 340.

There can also be seen the nitrogen tanks 549 used to store the nitrogen used in the specific weight adapter.

It is also envisaged that a renewable energy hub 504 could receive power from other devices in the form of any pressurised fluid or electric current.

Likewise, the renewable energy hub may be adapted to transform surplus power into hydrogen and/or other energy vectors and utilise existing infrastructure, such as pipelines, to convey said energy vectors to/from shore. In this embodiment, there is a hydrogen production facility 550 on the platform.

Furthermore, the renewable energy hub, when installed over an abandoned gas/oil well, may be adapted to perform carbon capture and storage (CCS).

In addition, the renewable energy hub may be adapted to serve as a charging point in the middle of the ocean for devices such as ROUVs (remotely operated underwater vehicles), inspection drones, etc., or a hydro station for vessels.

There are also some atmospheric tanks 345 to deal with the change of mode from generation to storage.

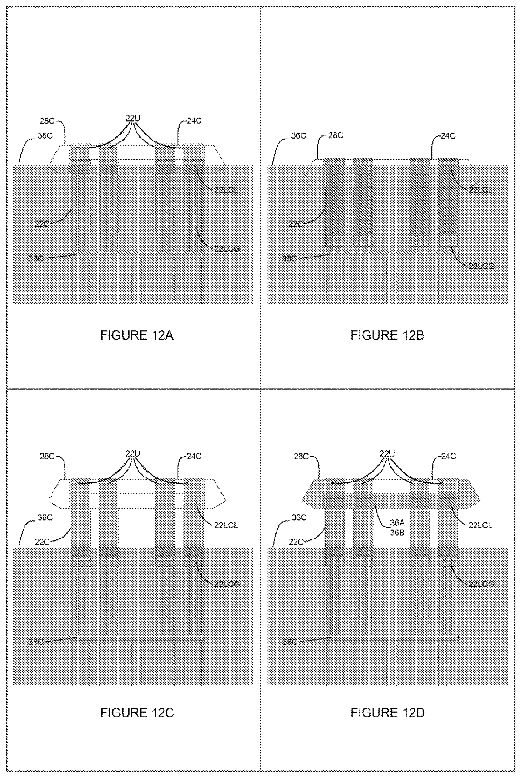

### Storage mode in action - Figure 12

Figure 12A shows one of the embodiments proposed in Figures 1A/1B in plan view. In this particular view, the Reciprocating Assembly 24C is simply floating on the ocean 36C, still in Generation Mode. The darker grey show the fluid in the cylinders 22C.

At this stage, the Media Shutter Mechanism's diaphragm is released allowing it to move vertically.

Figure 12B. The apparatus starts to receive fluid from the renewable energy hub which fills the liquid part of the lower chamber making the Media Shutter Mechanism 54 descend, sending the exceeding gas in 22LCG to the renewable energy hub. As a result of the bigger weight, the Reciprocating Assembly sinks and once the Media Shutter Mechanism reaches the lowest position, the diaphragm is pressurised from the hub, which makes it expand and lock its vertical position.

Figure 12C. Once the Media Shutter Mechanism is locked, the additional fluid received from the renewable energy hub will cause the Reciprocating Assembly 24C raise. Figure 12C shows the maximum height achieved by the system.

Once at its highest position, the watering system will start pumping seawater to the ballast tanks. This has been shown in Figure 12D. From Figure 12D back to Figure 12A, the system will adopt the Generation Mode to return the energy to the consumer the renewable energy hub is connected to.

If there was high tide at the stage of Figure 12A and low tide when the Reciprocating Assembly comes back to its original position, the tidal range will also be used to potentially deliver more energy than the device had originally absorbed (or at least it will reduce the losses).

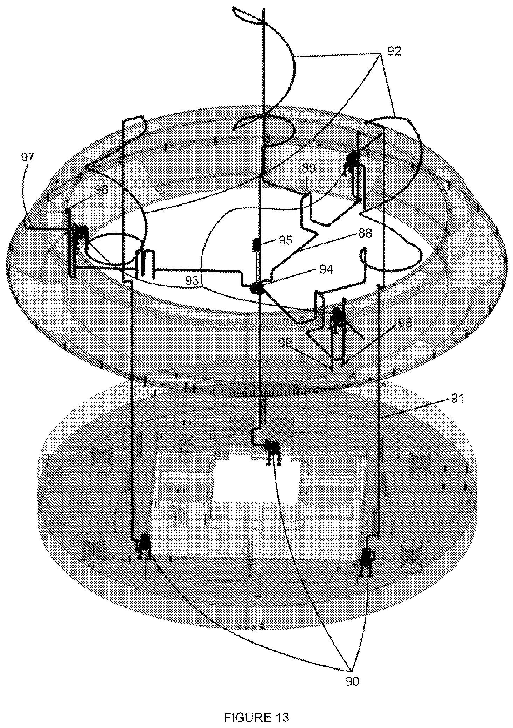

### Watering System - Figure 13

Figure 13 shows the watering system that allows to ingress and egress water, normally in Storage mode. A transparent version of the Dynamic Compensation Tank and the Connecting Board have also been drawn for clarity about the position of the different components.

Auxiliary pumps 90 situated in the Connecting Board will absorb seawater from the ocean. Pipes 91 are columns that go through the piston rods and connect to these auxiliary pumps 90 to raise the pumped water. When water is at its highest position the retractile hoses 92 will conduct the water to find a 3-way valve 89 that will divert the seawater to the main pumps 93. This will allow to flood the Dynamic Compensation Tank using pipe 98 or the Static Compensation Tank using pipe 96. Main pumps 93 can also extract water from the Static Compensation Tank absorbing this with foot valve 99 and egressing the water with pipe 97.

Water can also be obtained while the Reciprocating Assembly is buoyant. This can be done using motor 95 to turn valve 94 and using pipe 88 take the water to the main pumps. Valve 94 can either allow seawater to ingress the Static Compensation Tank or to connect with pipes 88.

## Claims

1. A wave energy production apparatus (10A, 10B) for producing energy from the heave motion of the surface of a body of water, said apparatus comprising:
one or more compression module(s) (18A, 18B) which comprise(s) a piston (20A, 20B) and a cylinder (22A, 22B) assembly; and a reciprocating assembly (24A, 24B) positioned around the compression module(s) (18A, 18B), wherein the reciprocating assembly (24A, 24B) is operatively connected to cylinder(s) (22A, 22B), such that, in Generation Mode, reciprocates together with the cylinder(s) (22A, 22B) relative to the piston(s) (20A, 20B) of the compression module(s) (18A, 18B) due to the movement caused by the heave and sinking movement of the surface of the body of water, wherein said reciprocating assembly (24A, 24B) comprises at least one first weight changing mechanism comprising one or more dynamic compensation tank (28A, 28B), which has at least one aperture (30) with a closure (32) configured to open and establish fluid communication between the dynamic compensation tank (28A, 28B) and the body of water (12A, 12B) in order to allow water to at least partially flood the dynamic compensation tank(s) (28A, 28B) when the water surface rises or heaves and the reciprocating assembly (24A, 24B) moves upward relative to the piston(s) (20A, 20B) and to close fluid communication between the dynamic compensation tank(s) (28A, 28B) and the body of water (12A, 12B) and retain water inside the dynamic compensation tank(s) (28A, 28B) when the water surface sinks and the reciprocating assembly (24A, 24B) moves downwards relative to the piston(s) (20A, 20B), wherein the cylinder(s) (22A, 22B) of the compression module(s) (18A, 18B) are configured to contain a fluid that is energised by the reciprocating movement of the cylinder(s) (22A, 22B), in Generation Mode, and said energised fluid is used to produce a fluid pressure that is eventually converted in electric energy
wherein the one or more compression modules (18A, 18B) are supported on a base, henceforth also called a connecting board (38A, 38B), by means of one or more piston rods (40).

2. An apparatus (10A, 10B) according to claim 1 wherein the connecting board (38A, 38B) is reversibly attachable to an underwater structure (14A, 14B) fixedly connected to the bottom (16A, 16B) of the body of water.

3. An apparatus (10A, 10B) according to claim 1 or 2 wherein the connecting board (38A, 38B) comprises a quick coupling interlocking actuator (42) to couple and decouple the connecting board (38A, 38B) from an underwater structure (14A, 14B).

4. An apparatus (10A) according to any preceding claim wherein the one or more compression modules (18A) are divided by the piston (20A) in an upper chamber (22U) and a lower chamber (22L) and wherein the one or more compression module(s) (18A) are connected to a first fluid circuit (200A) configured to transform the oscillating fluid pressure differential between the upper (22U) and the lower chamber(s) (22L) of the compression module(s) (18A) into a pressure differential that is delivered to permanent high and a low pressure points (310, 320) of a second fluid circuit (300); and wherein the permanent high and low pressure points (310, 320) are fluidly connected by the second fluid circuit (300) so as to drive one or more turbines (330a, 330b, 330c) configured to transform the pressure differential into electric energy.

5. An apparatus (10A) according to claim 4 wherein the permanent high and low pressure points (310, 320) are fluidly connected to one or more buffer tank(s) (340) for accommodating variations in fluid quantity and/or pressure.

6. An apparatus according to any of claims 4 or 5 wherein the lower chamber(s) (22L) and the upper chamber(s) (22U) are fluidly connected to the first circuit (200A) through the piston rod(s) (40).

7. An apparatus (10A, 10B) according to any preceding claim comprising a plurality of compression modules (18A, 18B).

8. An apparatus (10A, 10B) according to claims 4 and 7 comprising several manifolds (210, 220) with automated valves to allow flexible fluid interconnections among the compression modules' upper (22U) and lower chambers (22L), respectively, and between these and the first fluid circuit (200A) such that the pressures and fluid flows in the first circuit (200A) are optimised.

9. An apparatus (10A, 10B) according to any preceding claim wherein the reciprocating assembly (24A, 24B) comprises a second weight changing mechanism comprising one or more secondary ballast tank(s) (36), henceforth also called static compensation tank(s).

10. An apparatus (10A, 10B) according to any preceding claim wherein the lower chamber (22L) of the compression modules comprises one partition (54), made by a piston, to divide the lower chamber in an upper subsection (22LA) filled with fluid and a lower subsection (22LB) which is to be filled with pressurised gas; wherein the dividing piston (54) is lockable by the expansion of a diaphragm.

11. An apparatus (10A, (10B) according to any preceding claim configured to delay the downward motion of the reciprocating assembly (24A, 24B) with respect of the sinking movement of the surface of the body of water.

12. An apparatus (10B) according to any preceding claim wherein the at least one closure (32) comprises a rotating plate (212B) with one or more permanent magnets (214B) solidarily attached thereto and a cable (218B) or a series of cables connected in parallel and arranged along the rotating plate (212B) perpendicularly to the rotating movement, that transmit an electric current to activate the rotating motion of the plate (212B).

13. An apparatus (10B) according to any preceding claim and claim 4 wherein the second fluid circuit (300) is located in a separate facility, named renewable energy hub (504).

14. An energy production association (500) comprising one or more wave energy production apparatus according to claim 13 and at least one renewable energy hub (504) in which the second fluid circuit (300), turbine(s) (330a, 330b, 330c) and buffer tank(s) (340) are located.

15. A wave energy production apparatus (10B) according to any of claims 1 to 13 having a dual functionality in the compression modules (18B) that allows them to act producing a differential pressure with the vertical movement of waves and/or producing a vertical movement with a differential pressure.

## Patentansprüche

1. Ein Wellenenergieerzeugungsgerät (10A, 10B) zur Energieerzeugung aus der Hebbewegung der Wasseroberfläche eines Gewässers, wobei dieses Gerät besteht aus:
ein oder mehrere Kompressionsmodul(e) (18A, 18B), die jeweils aus einem Kolben (20A, 20B) und einem Zylinder Anordnung (22A, 22B) umfassen; und eine um das/die Kompressionsmodul(e) (18A, 18B) angeordnete Hubbaugruppe (24A, 24B), das/die operativ mit den Zylindern (22A, 22B) verbunden ist/sind, so dass sich im Erzeugungsmodus zusammen mit den Zylindern (22A, 22B) relativ zu den Kolben (20A, 20B) des Kompressionsmoduls (18A, 18B) aufgrund der durch die Heb- und Absinkbewegung der Wasseroberfläche verursachten Bewegung hin- und hersinkt, wobei die besagte hin- und hersinkende Hubbaugruppe (24A, 24B) besteht aus mindestens einem ersten Gewichtsänderungsmechanismus, der aus einem oder mehreren dynamischen Kompensationstanks (28A, 28B) besteht, der mindestens eine Öffnung (30) mit einem Verschluss (32) besitzt, der so konfiguriert ist, dass er die Flüssigkeitskommunikation zwischen dem dynamischen Kompensationstank (28A, 28B) und dem Gewässer (12A, 12B) ermöglicht damit Wasser zumindest teilweise den dynamischen Kompensationstank (28A, 28B) flutet, wenn die Wasseroberfläche ansteigt oder sich hebt und die hin- und hergehende Baugruppe (24A, 24B) sich relativ zu den Kolben (20A, 20B) nach oben bewegt (20A, 20B), und um die Flüssigkeitskommunikation zwischen dem dynamischen Kompensationstank (28A, 28B) und dem Gewässer (12A, 12B) zu schließen und das Wasser im dynamischen Kompensationstank (28A, 28B) zurückzuhalten, wenn die Wasseroberfläche sinkt und die Hubbaugruppe (24A, 24B) relativ zu den Kolben (20A, 20B) nach unten wandert, wobei die Zylinder(s) (22A, 22B) des Kompressionsmoduls (18A, 18B) so konfiguriert sind, dass sie eine Flüssigkeit enthalten, die durch die hin- und hergelaufene Bewegung des Zylinders/der Zylinder energetisiert wird (22A, 22B), im Erzeugungsmodus, und das besagte energetisiert Flüssigkeit wird verwendet, um einen Flüssigkeitsdruck zu erzeugen, der schließlich in elektrische Energie umgewandelt wird
wobei ein oder mehrere Kompressionsmodule (18A, 18B) auf einer Basis getragen werden, die fortan auch als Verbindungsplatte (38A) bezeichnet wird, mittels eines oder mehrerer Kolbenstangen (40).

2. Ein Gerät (10A, 10B) nach Anspruch 1, wobei die Verbindungsplatte (38A, 38B) reversibel an eine Unterwasserstruktur (14A, 14B) befestigt ist, die fest am Boden (16A, 16B) des Gewässers verbunden ist.

3. Ein Gerät (10A, 10B) nach Anspruch 1 oder 2, wobei die Verbindungsplatte (38A, 38B) aus einem Schnellkupplungs-Verriegelaktuator (42) besteht, der die Verbindungsplatte (38A, 38B) von einer Unterwasserstruktur (14A, 14B) koppelt und entkoppelt.

4. Ein Gerät (10A) nach einer vorherigen Anspruch, wobei ein oder mehrere Kompressionsmodule (18A) durch den Kolben (20A) in einer oberen Kammer (22U) und einer unteren Kammer (22L) geteilt werden, und wobei ein oder mehrere Kompressionsmodul(e) (18A) mit einem ersten Fluidkreislauf (200A) verbunden sind, der so konfiguriert ist, dass der oszillierende Flüssigkeitsdruckunterschied zwischen der oberen (22U) und der unteren Kammer(n) (22L) des Kompressionsmoduls (18A) in einen Druckunterschied umgewandelt wird, der zu dauerhaften hohen und niedrigen Druckpunkten (310, 320) eines zweiten Fluidkreislaufs (300) geliefert wird; und in dem die dauerhaften Hoch- und Niederdruckpunkte (310, 320) durch den zweiten Fluidkreislauf (300) flüssig miteinander verbunden sind, um eine oder mehrere Turbinen (330A, 330B, 330C) anzutreiben, die so konfiguriert sind, dass der Druckunterschied in elektrische Energie umgewandelt wird.

5. Ein Gerät (10A) nach Anspruch 4, bei dem die dauerhaften Hoch- und Niederdruckpunkte (310, 320) flüssig mit einem oder mehreren Pufferbehältern (340) verbunden sind, um Schwankungen in Flüssigkeitsmenge und/oder Druck auszugleichen.

6. Ein Gerät nach einem der Ansprüche 4 oder 5, bei dem die untere(n) Kammer(n) (22L) und die obere(n) Kammer(n) (22U) flüssig mit dem ersten Fluidkreislauf (200A) über die Kolbenstange(n) (40) verbunden sind.

7. Ein Gerät (10A, 10B) nach einem der vorhergehenden Ansprüche, der eine Vielzahl von Kompressionsmodulen umfasst (18A, 18B).

8. Ein Gerät (10A, 10B) nach den Ansprüchen 4 und 7, das aus mehreren Verteiler (210, 220) mit automatischen Ventilen besteht, um flexible Fluidverbindungen zwischen den oberen (22U) bzw. unteren Kammern (22L) der Kompressionsmodule sowie zwischen diesen und dem ersten Fluidkreislauf (200A) zu ermöglichen, sodass Druck und Fluidströme im ersten Kreis (200A) sind optimiert.

9. Ein Gerät (10A, 10B) nach einem vorhergehenden Anspruch, wobei die Hubkolbenbaugruppe (24A, 24B) einen zweiten Gewichtsveränderungsmechanismus mit einem oder mehreren sekundären Ballasttanks (36) umfasst, der fortan auch statische Kompensationstanks genannt wird.

10. Ein Gerät (10A, 10B) nach einem vorhergehenden Anspruch, wobei die untere Kammer (22L) der Kompressionsmodule aus einer Trennwand (54) besteht, die durch einen Kolben gebildet wird, um die untere Kammer in einen oberen Unterabschnitt (22LA) mit Flüssigkeit gefüllt worden ist und einen unteren Unterabschnitt (22 LB), der mit Druckgas gefüllt worden ist, zu teilen; wobei die Trennwand (54) durch die Ausdehnung einer Membran verriegelbar ist.

11. Ein Gerät (10A, (10B) nach einem vorhergehenden Anspruch, die so konfiguriert ist, dass sie die Abwärtsbewegung der hin- und hergehenden Baugruppe (24A, 24B) in Bezug auf die sinkende Bewegung der Wasseroberfläche verzögert.

12. Eine Gerät (10B) nach einem vorhergehenden Anspruch, wobei der mindestens ein Verschluss (32) eine Drehplatte (212B) mit einem oder mehreren fest daran befestigten Permanentmagneten (214B) und einem Kabel (218B) oder einer Reihe von parallel verbunden und entlang der rotierenden Platte Kabeln (212B), die senkrecht zur rotierenden Bewegung angeordnet sind, die einen elektrischen Strom überträgen, um die Drehbewegung der Drehplatte (212B) zu aktivieren.

13. Ein Gerät (10B) nach einem vorhergehenden Anspruch und Anspruch 4, wobei sich der zweite Flüssigkeitskreislauf (300) in einer separaten Anlage befindet, genannt erneuerbare Energie Hub (504).

14. Eine Energieproduktionsanlage (500), bestehend aus einer oder mehreren Geräten nach Anspruch 13, und mindestens einem erneuerbaren Energie Hub (504), in dem sich der zweite Fluidkreislauf (300), die Turbine (330a, 330b, 330c) und der Puffertank (340) befinden.

15. Ein Gerät (10B) nach einem der Ansprüche 1 bis 13 das eine doppelte Funktionalität in den Kompressionsmodulen (18B) besitzt, die es ihnen ermöglicht, einen Differenzdruck bei der vertikalen Bewegung der Wellen erzeugen und/oder eine vertikale Bewegung mit Differenzdruck zu erzeugen.

## Revendications

1. Un appareil de production d'énergie houlomotrice (10A, 10B) pour produire de l'énergie à partir du mouvement de soulèvement de la surface d'une masse d'eau, ledit appareil comprenant:
un ou plusieurs modules de compression (18A, 18B) comprenant ensemble de un piston (20A, 20B) et un cylindre (22A, 22B) ; et un ensemble mobile alternatif (24A, 24B) positionné autour du(s) module(s) de compression (18A, 18B), dans lequel l'ensemble mobile alternatif (24A, 24B) est opérationnellement connecté à un ou plusieurs cylindres (22A, 22B), de sorte qu'en mode génération, il fait un mouvement alternatif avec le(s) cylindre(s) (22A, 22B) par rapport au(s) piston(s) (20A, 20B) du ou des modules de compression (18A, 18B) en raison du mouvement causé par le soulèvement et le mouvement de descente de la surface de la masse d'eau, dans lequel ledit ensemble mobile alternatif (24A, 24B) comprend au moins un premier mécanisme de changement de poids comprenant un ou plusieurs réservoirs de compensation dynamique (28A, 28B), qui possède au moins une ouverture (30) avec une fermeture (32) configurée pour ouvrir et établir la communication fluide entre le réservoir de compensation dynamique (28A, 28B) et la masse d'eau (12A, 12B) afin de permettre à l'eau d'inonder au moins partiellement le(s) réservoir(s) de compensation dynamique (28A, 28B) lorsque la surface de l'eau monte ou soulève et que l'ensemble mobile alternatif (24A, 24B) monte par rapport au(x) piston(s) (20A, 20B) et de fermer la communication fluide entre le(s) réservoir de compensation dynamique (28A, 28B) et le plan d'eau (12A, 12B) et retenir l'eau à l'intérieur du(s) réservoir(s) de compensation dynamique(s) (28A, 28B) lorsque la surface de l'eau s'enfonce et que l'ensemble mobile alternatif (24A, 24B) descend par rapport au(s) piston(s) (20A, 20B), où le(s) cylindre(s) (22A, 22B) du ou des modules de compression (18A, 18B) sont configurés pour contenir un fluide qui est dynamisé par le mouvement alternatif du ou des cylindres (22A, 22B), en mode génération, et ce fluide dynamisé est utilisé pour produire une pression de fluide qui est finalement convertie en énergie électrique
où un ou plusieurs modules de compression (18A, 18B) sont supportés sur une base, désormais appelée plaque de connexion (38A), au moyen d'une ou plusieurs tiges de piston (40).

2. Un appareil (10A, 10B) selon la revendication 1, dans lequel la plaque de connexion (38A, 38B) est réversiblement fixable à une structure sous-marine (14A, 14B) fixement reliée au fond (16A, 16B) de la masse d'eau.

3. Un appareil (10A, 10B) selon la revendication 1 ou 2 dans lequel la plaque de connexion (38A, 38B) comprend un actionneur d'accouplement rapide ( 42) pour accoupler et découpler la plaque de connexion (38A, 38B) d'une structure sous-marine (14A, 14B).

4. Un appareil (10A) selon toute revendication précédente où un ou plusieurs modules de compression (18A) sont divisés par le piston (20A) dans une chambre supérieure (22U) et une chambre inférieure (22L) et où un ou plusieurs modules de compression (18A) sont connectés à un premier circuit fluide (200A) configuré pour transformer la différence de pression oscillante entre la chambre supérieure (22U) et la chambre inférieure (22L) du ou des modules de compression (18A) en une différence de pression délivrée aux points de pression permanents hauts et bas (310, 320) d'un second circuit fluide (300) ; et dans lequel les points de haute et basse pression permanents (310, 320) sont connectés fluidement par le second circuit fluide (300) afin d'entraîner une ou plusieurs turbines (330A, 330B, 330C) configurées pour transformer la différence de pression en énergie électrique.

5. Un appareil (10A) selon la revendication 4 où les points de pression permanents haute et basse (310, 320) sont reliés fluidement à un ou plusieurs réservoirs tampons (340) pour accommoder les variations de quantité de fluide et/ou de pression.

6. Un appareil selon l'une des revendications 4 ou 5 dans lequel la ou les chambres inférieures (22L) et la ou les chambres supérieures (22U) sont reliées fluidement au premier circuit (200A ) via la ou les tiges du piston (40).

7. Un appareil (10A, 10B) selon toute revendication précédente comprenant une pluralité de modules de compression (18A, 18B).

8. Un appareil (10A, 10B) selon les revendications 4 et 7 comprenant plusieurs collecteurs (210, 220) avec des vannes automatisées permettant des interconnexions fluides flexibles entre les chambres supérieure (22U) et inférieure (22L) des modules de compression, respectivement, et entre ceux-ci et le premier circuit fluide (200A), de sorte que les pressions et les débits de fluide dans le premier circuit (200A) sont optimisés.

9. Un appareil (10A, 10B) selon toute revendication précédente dans lequel l'ensemble mobile alternatif (24A, 24B) comprend un second mécanisme de changement de poids comprenant un ou plusieurs réservoirs secondaires de lest (36), désormais également appelés réservoirs de compensation statique.

10. Un appareil (10A, 10B) selon toute revendication précédente dans lequel la chambre inférieure (22L) des modules de compression comprend une cloison (54), réalisée par un piston, divisant la chambre inférieure en un sous-section supérieur (22LA) rempli de fluide et un sous-section inférieur (22LB) qui doit être rempli de gaz sous pression; où le piston diviseur (54) est verrouillable par l'expansion d'un diaphragme.

11. Un appareil (10A, (10B) selon toute revendication précédente configuré pour retarder le mouvement descendant de l'ensemble mobile alternatif (24A, 24B) par rapport au mouvement de descente de la surface de la masse d'eau.

12. Un appareil (10B) selon toute revendication précédente où au moins une fermeture (32) comprend une plaque rotative (212B) avec un ou plusieurs aimants permanents (214B) solidairement attachés et un câble (218B) ou une série de câbles reliés en parallèle et disposés le long de la plaque rotative (212B) perpendiculairement au mouvement en rotation, qui transmettent un courant électrique pour activer le mouvement rotatif de la plaque (212B).

13. Un appareil (10B) selon toute revendication précédente et la revendication 4, dans lequel le second circuit fluide (300) est situé dans une installation distincte, nommée hub d'énergie renouvelable (504).

14. Une association de production d'énergie (500) comprenant un ou plusieurs appareils de production d'énergie des vagues selon la revendication 13 et au moins un centre d'énergie renouvelable (504) dans lequel se trouvent le second circuit fluide (300), la ou les turbines (330a, 330b, 330c) et les réservoirs tampons (340).

15. Un appareil de production d'énergie houlomotrice (10B), selon l'une des revendications 1 à 13, lequel possède une double fonctionnalité dans les modules de compression (18B) qui leur permet d'agir en produisant une pression différentielle avec le mouvement vertical des ondes et/ou de produire un mouvement vertical avec une pression différentielle.
